(19) Europäisches Patentamt
European Patent Office
Office européen des brevets

(11) **EP 3 532 429 B1**

(12) **EUROPEAN PATENT SPECIFICATION**

(45) Date of publication and mention
of the grant of the patent:
**06.08.2025 Bulletin 2025/32**

(21) Application number: **17866088.2**

(22) Date of filing: **26.10.2017**

(51) International Patent Classification (IPC):
**B82Y 20/00** (2011.01)    **G01B 11/00** (2006.01)
**G01N 21/00** (2006.01)

(52) Cooperative Patent Classification (CPC):
**G01N 21/21; B82Y 20/00; G01N 21/8851;
G01N 21/95;** G01N 21/47; G01N 21/59

(86) International application number:
**PCT/US2017/058573**

(87) International publication number:
**WO 2018/081452 (03.05.2018 Gazette 2018/18)**

(54) **HIGH THROUGHPUT, HIGH RESOLUTION OPTICAL METROLOGY FOR REFLECTIVE AND TRANSMISSIVE NANOPHOTONIC DEVICES**

OPTISCHE MESSTECHNIK MIT HOHEM DURCHSATZ UND HOHER AUFLÖSUNG FÜR REFLEKTIERENDE UND DURCHLÄSSIGE NANOPHOTONISCHE VORRICHTUNGEN

MÉTROLOGIE OPTIQUE À HAUT RENDEMENT ET HAUTE RÉSOLUTION POUR DISPOSITIFS NANOPHOTONIQUES RÉFLÉCHISSANTS ET TRANSMISSIFS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2016 US 201662413291 P**

(43) Date of publication of application:
**04.09.2019 Bulletin 2019/36**

(73) Proprietor: **Board of Regents, The University of
Texas System
Austin, TX 78701 (US)**

(72) Inventors:
• **SREENIVASAN, S.V.
Austin
Texas 78758 (US)**
• **GAWLIK, Brian
Austin
Texas 78758 (US)**
• **SINGHAL, Shrawan
Austin
Texas 78758 (US)**

(74) Representative: **Grünecker Patent- und
Rechtsanwälte
PartG mbB
Leopoldstraße 4
80802 München (DE)**

(56) References cited:
**EP-A2- 0 718 595      WO-A1-2011/061911
GB-A- 1 406 470       US-A- 4 541 716
US-A1- 2002 118 359    US-A1- 2009 119 808
US-B1- 7 433 034      US-B1- 7 433 034
US-B2- 8 670 116**

## Description

CROSS REFERENCE TO RELATED APPLICATIONS

This application claims the benefit of U.S. Provisional Patent Application Serial No. 62/413,291 filed October 26, 2016.

## STATEMENT REGARDING FEDERALLY SPONSORED RESEARCH

This invention was made with government support under Grant numbers ECCS1120823 and EEC1160494 awarded by the National Science Foundation. The government has certain rights in the invention

## FIELD

The present disclosure relates to optical metrology for nanophotonic devices.

## BACKGROUND

Recent advances in nanofabrication are paving the way towards manufacturing a host of large-area nanophotonic devices on wafer-scale and roll-to-roll (R2R) manufacturing lines. These devices include nanofabricated wire-grid polarizers (WGP) which can reduce power consumption in liquid crystal displays (LCD) by up to 20%, transparent metal mesh grids which enable flexible touch screens and displays, plasmonic color filters which can simplify camera color filter assembly and achieve higher camera resolution, and Si nanowire (SiNW) arrays which can be used to enhance a variety of sensing devices and have unique spectral qualities.

Manufacturing lines are being created to fabricate a variety of nanophotonic devices on both wafer-scale and roll-to-roll (R2R). Metrology is needed on these manufacturing lines to characterize devices and manage yield. The metrology must do characterization at high throughput, but it must also maintain high-spatial resolution so that small defects and subtle area-to-area variations can be identified.

In other words, manufacturing lines are being created to fabricate a variety of nanophotonic devices on either wafer-scale, roll-to-roll (R2R), and sheet-to-sheet (S2S) such as nanofabricated polarizers (NFP), metal mesh grids, and nano-structural colors. Metrology is needed for these manufacturing lines that is both high spatial resolution, and high throughput so that real-time inspection can be done while simultaneously having the ability to identify small defects and subtle area-to-area variations. Critical dimension (CD) metrologies such as SEM and AFM are far too low throughput to be good candidates for high throughput nanophotonic device manufacturing. On the other hand, functional metrology is very suitable for nanophotonic device manufacturing because it can be done at high throughput and high spatial resolution. This disclosure describes a general approach to functional metrology for nanophotonic devices called Nanophotonic Functional Metrology (NFM). NFM systems are comprised of three primary components: 1. Light Source(s), 2. Optical Components, and 3. Camera Sensor(s). The NFM system produces images of the nanophotonic properties of the nanophotonic device being inspected. Since the nanophotonic property images are spatially resolved, a variety of defects can not only be detected, but based on their spatial signature can be identified along with their root-cause which greatly assists yield management. The design considerations of general NFM systems are discussed as well as the data processing and some more specific design ideas. Some specific nanophotonic device manufacturing scenarios are addressed to illustrate some embodiments of NFM. Finally, we show an embodiment of root-cause analysis for NFPs.

Traditional critical dimension (CD) metrologies like scanning electron microscopy (SEM) and scatterometry have trouble hitting target throughput. SEM, for instance, can only measure CDs with a field-of-view on the order of the CD itself, and thus characterizing many square cm's of device area per minute is impossible. Scatterometry can be used to characterize areas as large as 1 cm$^2$, but the measurement is a single average of the entire area, meaning that small defects and subtle area-to-area variations are impossible to identify over large areas. In order for scatterometry to match the spatial resolution of the imaging spectrophotometer it would need to make millions of small-area measurements one-after-the-other, which would take too long to be practical. In addition, CD metrologies cannot scale with R2R nanophotonics manufacturing.

Recent advances in nanofabrication are paving the way towards manufacturing a host of nanophotonic devices on wafer-scale, roll-to-roll (R2R), and sheet-to-sheet (S2S) manufacturing lines. These nanophotonic devices include nanofabricated polarizers (WGP) [1,2,3,4] which can reduce power consumption in liquid crystal displays (LCD) by up to 20%, metal mesh grids which enable flexible touch screens and displays [5,6,7,8], perfect absorbers like black silicon [9], and various metallic and/or dielectric nano-structural colors [10-19] which may be useful as color filters in ultra-high resolution and/or micro-displays and prints or in spectral camera sensors.

Nanofabrication processes include slot-die coating, ink-jetting, gravure coating, dip coating, and knife-edge coating. Vacuum nanofabrication processes include vacuum deposition processes such as sputtering, e-beam evaporation, glancing angle sputtering, glancing angle e-beam evaporation, thermal evaporation, atomic layer deposition, chemical vapor deposition, and plasma-enhanced chemical vapor deposition; plasma etch processes such as reactive ion etching, inductively or capacitively coupled plasma reactive ion etching, and ion milling; vacuum patterning processes such as electron-beam lithography, x-ray lithography and ion-beam lithography. Additionally, ambient nanopatterning processes include photolithography, imprint lithography, isotropic wet etch techniques, and anisotropic wet etch techniques such as crystallographic etching and metal-assisted chemical etching.

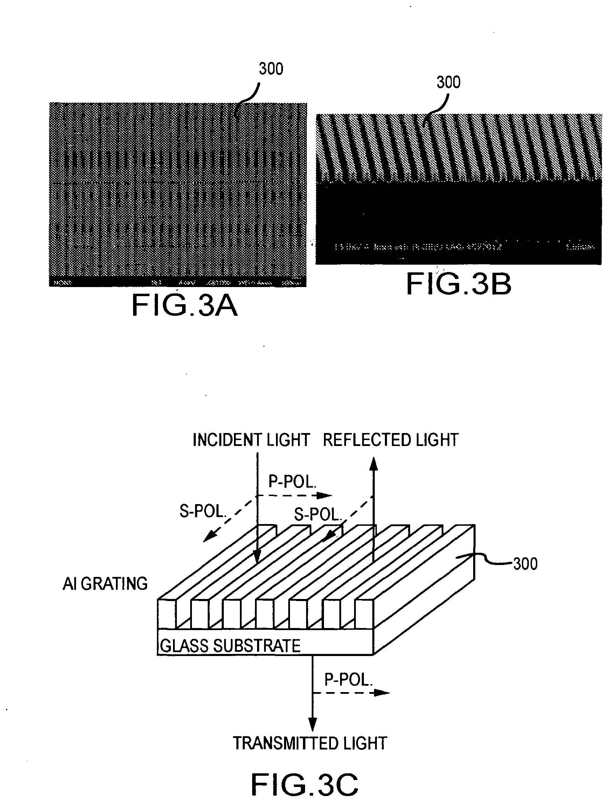

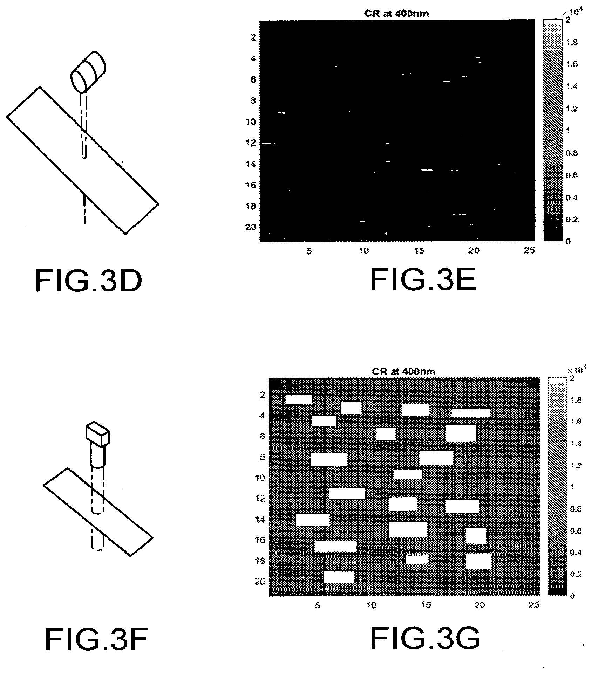

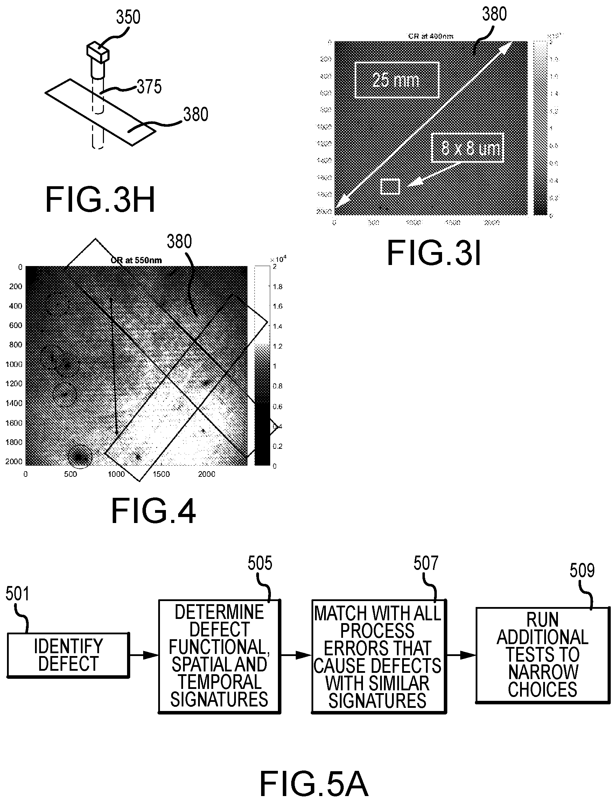

Metrology will be needed on these manufacturing lines to provide quality control and provide a means for yield management in which defective devices are identified and the root cause(s) of defectivity can be pin-pointed and corrected. The metrology must do characterization at high throughput in order to keep pace with the fabrication line, and its data must be spatially resolved so that small defects and subtle area-to-area variations can be successfully identified. As we will show, functional metrology for nanophotonic device can accomplish both of these things simultaneously. Prior systems shown in Figure 3 are illustrated for example. In Figure 3D, traditional spectrophotometry uses a single photomultiplier tube for the associated CR of Figure 3E. Imaging spectrophotometry of Figure 3F uses a cameral for parallel measurements shown in Figure 3G. Imaging spectrophotometry of Figure 3H as discussed herein shows greater resolution of CR calculation in Figure 3i. In Figure 3H, the sample plane of the nanophotonic device (380) is subject to light from below and directed through the nanophotonic device (380) to the camera (350).

The traditional approaches to nano-metrology, which are critical dimension (CD) metrologies like SEM and AFM, will have extreme trouble hitting throughputs necessary to keep pace with nanophotonic device manufacturing lines. SEM, for instance, can only measure CDs with a field-of-view on the order of the CD itself, and thus characterizing large areas at high throughput is nearly impossible. Scatterometry can be used to characterize larger areas and has the potential to utilize imaging techniques to achieve high spatial resolution, but the measurement usually requires acquisition of data at a large number of individual states (like different scattering angles) which are measured sequentially and is followed by an inverse model computation or a look-up table search for the CDs. This inherently limits the throughput of scatterometry.

Critical Dimension (CD) metrologies have trouble scaling with high throughput nanophotonic device manufacturing. Fortunately, CD metrology is not necessary for device characterization. Functional metrology - which as the name implies measures the function of the device - can be used instead, and in this case it is capable of much higher throughput. Functional metrology is routinely used in the semiconductor industry in the form of electrical testing of chips. An electrical test can be done in seconds which can qualify a chip comprised of billions of individual transistors, vias, and interconnects all with important CDs. One could argue that if a chip passes electrical testing it can be assumed that the CDs are at specification without needing to directly measure them. Now, because chip manufacturing lines have hundreds of individual fabrication steps, CD metrology at intermediate steps is still necessary, but in nanophotonic device manufacturing completed devices can require just a handful of fabrication steps (~5). It is most efficient to do functional metrology on the completed nanophotonic devices without intermediary CD metrology.

Metrology will be needed on these manufacturing lines to provide quality control and provide a means for yield management in which defective devices are identified and the root cause(s) of defectivity can be pin-pointed and corrected. The metrology must do characterization at high throughput in order to keep pace with the fabrication line, and its data must be spatially resolved so that small defects and subtle area-to-area variations can be successfully identified. As we will show, functional metrology for nanophotonic device can accomplish both of these things simultaneously.

The systems and methods disclosed herein address these and other needs.

US 4 541 716 A discloses a topographical defect detecting apparatus and process for optically inspecting a circular or spiral track surface defining a diffraction grating such as exists on a video disc or optical disc record. Light from a substantially point source illuminates the track surface. Diffracted reflections from the surface are viewed by the human eye with or without the aid of a TV camera and monitor. Non-uniformities in track spacing and deviation from average surface flatness are observable.

## SUMMARY

It is therefore the object of the present invention to provide an improved large area functional metrology system for inspecting a nanophotonic device being a wire-grid polarizer, and a corresponding method for monitoring of a nanofabrication process.

This object is solved by the subject matter of the independent claims 1 and 6.

Preferred embodiments are defined by the dependent claims.

## BRIEF DESCRIPTION OF THE DRAWINGS

The examples in the following description are merely useful for understanding the present invention, which is defined only by the subject matter of the claims but not by the following examples unless expressly presented as an embodiment of the present invention.

FIGS. 1A and 1B are schematic views of system architectures for transmissive and reflective measurements.

FIG. 2. is a schematic view of a general system architecture for transmissive and reflective measurements.

FIGS. 3A and 3B are scanning electron microscopy (SEM) image of wire-grid polarizers (WGPs) on a glass substrate as discussed in this disclosure.

FIGS. 3C is a schematic view of a wire grid polarizer optical function as disclosed herein.

FIGS. 3D and 3E are corresponding views of traditional spectrophotometry measurement tools and a corresponding contrast ratio plot as described in this disclosure.

FIGS 3F and 3G are corresponding views of imaging spectrophotometry measurement tools and a corresponding camera based imaging of the contrast ratio as described in this disclosure.

FIGS 3H and 3I are corresponding views of imaging spectrophotometry measurement tools and a corresponding megapixel (high resolution) camera based imaging of the contrast ratio as described in this disclosure.

FIG. 4. is an example image of the contrast ratio at a given wavelength using the spectrophotometry of Figure 3H and identifying defects in a corresponding nanophotonic device as described herein.

FIG. 5A is a flow chart for a computerized method of identifying defects in a nanophotonic device according to the system and methods disclosed herein.

FIG. 5B. is an example plot of a mean contrast ratio versus wavelength of sample beam light directed to a nanophotonic device according to the system and methods disclosed herein.

FIG. 5C is an example schematic of a lighting assembly used to implement the method of FIG. 5A.

FIG. 6A is a schematic showing a metrology architecture according to this disclosure to account for a moving sample subject to imaging.

FIG. 6B is a schematic showing a metrology architecture according to this disclosure to account for a moving sample subject to imaging by installing a line screen camera in proper position.

FIG. 6C is a schematic illustration of respective transmissive and reflective metrology architectures to account for a moving sample as discussed herein.

FIG. 7 is a schematic illustration of a metrology architecture for subjecting a wire grid polarizer to the contrast ratio and transmission intensity analysis described herein.

FIG. 8 is a schematic illustration of a metrology architecture for subjecting a wire grid polarizer to the contrast ratio and transmission intensity analysis described herein.

FIG. 9 is a schematic illustration of a metrology architecture and exposure time constraint for subjecting a wire grid polarizer to the contrast ratio and transmission intensity analysis for p-polarization as described herein.

FIG. 10 is a schematic illustration of a metrology architecture and exposure time constraint for subjecting a wire grid polarizer to the contrast ratio and transmission intensity analysis as a function of the s-polarization as described herein.

FIGS. 11A and 11B are schematic illustrations of a metrology architecture, exposure time constraints, and transition delays caused by a change in the polarization state for subjecting a wire grid polarizer to the contrast ratio and transmission intensity analysis as a function of the s-polarization as described herein.

FIG. 11C is a schematic illustration of a metrology system as shown in FIGS. 7-11B and configured with parallel polarization architectures for respective Tp and Ts analysis simultaneously.

FIG. 12 is an annotated image of the defects shown on a nanophotonic device of FIG. 4 subject to metrology set forth in FIGS. 6-11.

FIG. 13 is an illustration of the image of FIG. 12 in which a threshold value reduces noise and emphasizes defects present in a nanophotonic device of FIG. 4 subject to metrology set forth in FIGS. 6-11.

FIG. 14 is an image of four broad categories of defects. (i) particle causing a circular exclusion zone at the top left corner, (ii) nozzle-nozzle drop volume variation seen in the horizontal stripes that are of varying shades, (iii) inkjet printhead misfire seen in the blue vertical lines, and (iv) sub-optimal imprint force recipe which causes RLT variations seen in the blue annular ring at the center because of hard contact of the template with the wafer.

FIGS. 15A and 15B are images of particle defects. A particle causes a circular exclusion zone where there may not be any features patterned, as seen in the figure on the left. The figure on the right gives a zoomed image of a typical particle that can cause such defects.

FIG. 16 is a set of RGB (Red, Green, Blue) images of silicon nanowire (SiNW) array samples with their corresponding SEMs and reflectance spectra.

FIG. 17 is a schematic of an exemplary metrology architecture for a roll to roll manufacturing assembly configured to provide image data to calculate contrast ratio and transmission intensities as described herein.

FIG. 18 is a schematic of an exemplary metrology architecture for a vertical silicon nanowire array on a wafer scale sufficient to provide a set of light reflectance data for a subject nanophotonic device.

## DETAILED DESCRIPTION

Reference will now be made in detail to the embodiments, examples of which are illustrated in the drawings and the examples. The disclosure, however, be embodied in many different forms and should not be construed as limited to the embodiments set forth herein.

Unless defined otherwise, all technical and scientific terms used herein have the same meaning as commonly understood to one of ordinary skill in the art to which this disclosure belongs. The term "comprising" and variations thereof as used herein is used synonymously with the term "including" and variations thereof and are open, non-limiting terms. Although the terms "comprising" and "including" have been used herein to describe various embodiments, the terms "consisting essentially of" and "consisting of" can be used in place of "comprising" and "including" to provide for more specific embodiments and are also disclosed. As used in this disclosure and in the appended claims, the singular forms "a", "an", "the", include plural referents unless the context clearly dictates otherwise.

The following definitions are provided to assist with terms used in this specification and are in no way limiting of the disclosure. The definitions serve only as examples of respective interpretations of the terms at hand.

**Nanophotonic Functional Metrology (NFM)** - functional metrology for nanophotonic devices which we will call Nanophotonic Functional Metrology (NFM). NFM records images of a nanophotonic device transmitting, reflecting, diffracting, polarizing, or scattering light as a function of the state and in some cases of a reference in a known state and then processes these images to calculate nanophotonic properties as a function of state.

**Nanophotonic Device** - A device which has a minimum feature size which is on the order of the wavelength of the light with which it interacts and the geometry or material properties of said features are designed to provide a specific nanophotonic property as an output.

**Reference** - An artifact which has a substantially known value of one or more nanophotonic properties and images of which are sometimes used as the denominator in the image processing to calculate nanophotonic properties of nanophotonic devices. Examples of references include highly reflective mirrors and air (often used in transmittance measurements to approximate perfect transmittance).

**Intensity** - A quantity which is proportional to the average light flux which was detected by the camera sensor during the measurement. Abbreviated with I (particularly in table 1). A detailed mathematical description of how intensity is calculated can be found in the section titled "Image Processing".

**Nanophotonic Property** - A property of the nanophotonic device which is a quantity describing how the nanophotonic device affects with which it interacts light. Includes the following items listed in Table A:

*Table A. Nanophotonic Properties and Their Quantitative Definition*

| Transmittance | $T = \dfrac{I_{sample,\ transmitted}}{I_{reference}}$ | (Eq. 1)* ** |
|---|---|---|
| Reflectance | $R = \dfrac{I_{sample,\ reflected}}{I_{reference}}$ | (Eq. 2) |
| Absorptance | $A = 1 - I_{Transmittance} - I_{Reflectance}$ | (Eq. 3) |
| Diffraction Efficiency | $\eta_{Diffract} = \dfrac{I_{sample,\ diffracted}}{I_{reference}}$ | (Eq. 4) |
| Scattering Efficiency | $\eta_{Scatter} = \dfrac{I_{sample,\ scattered}}{I_{reference}}$ | (Eq. 5) |
| Polarization Efficiency | $\eta_{Polarization} = \dfrac{I_{sample,\ polarized}}{I_{reference}}$ | (Eq. 6) |
| Polarization Conversion Efficiency | $\eta_{Polarization\ Conv} = \dfrac{I_{sample,\ polarized}\ ***}{I_{reference,\ polarized}}$ | (Eq. 7) |

(continued)

| | |
|---|---|
| Contrast Ratio | $CR = \dfrac{I_{sample,\ transmitted,\ p-polarized}}{I_{sample,\ transmitted,\ s-polarized}}$ $= \dfrac{T_{p-polarized}}{T_{s-polarized}}$ (Eq.8)**** |
| Haze | $I_{Haze} = \dfrac{\sum I_{sample,\ scattering\ efficiencies,\ >2.5^o}}{\sum I_{sample,\ scattering\ efficiencies,\ \leq 2.5^o}}$ (Eq.9) |

*I is the abbreviation for Intensity. See definition of Intensity.

** Sample is a subscript denoting the sample beam, and reference is a subscript denoting the reference beam.

***The polarization state of the sample intensity here is different than that of the reference

****Note that CR can also be calculated from the transmittances of p- and s-polarized light.

State - Something which describes the light which is interacting with the nanophotonic device or the light which is being detected by the camera sensor. Is composed of the following:

1. Spectral content of the light irradiating the nanophotonic device
2. Polarization content of the light irradiating the nanophotonic device
3. Angle of incidence the light irradiating the nanophotonic device makes with the nanophotonic device's surface
4. Viewing angle of the camera
5. Range of acceptance angles of the camera
6. Spectral content of the light irradiating the camera sensor
7. Polarization content of the light irradiating the camera sensor.

**Light** - Electromagnetic radiation including, but not limited to ultraviolet, visible, near infrared, infrared light, etc.

**Light Source** - Something which produces light.

**Optical Components** - Something which refracts light (such as a lens), reflects light (such as a mirror), diffracts light (such as a diffraction grating), scatters light (such as a diffuser), and/or modulates the spectral or polarization content of light. Can be used to control the state of the light.

**Camera Sensor** - an array of light detectors which sense light. The camera sensor can either be an area sensor or a linescan sensor. Some examples of camera sensors include: Monochrome camera, color camera, RGB camera, three chip color camera, multispectral camera, hyperspectral camera, electron multiplied charge coupled device (EMCCD) camera, intensified charge coupled device (ICCD) camera, electron multiplied intensified charge coupled device camera (emICCD), avalanche photodiode array, time delay integration (TDI) lines can camera, bilinear color linescan camera, trilinear color linescan camera, quadlinear color linescan camera.

**Defect** - something which is significantly different than the intended design of said nanophotonic device and causes a difference in a nanophotonic property of said nanophotonic device

**Defect Detection** - sensing the presence of an undefined defect.

**Defect Identification** - knowing the specific type of defect that has been detected.

**Root-Cause** - A deviation from a nominal fabrication process.

**Object Space Pixel Size** - the pixel size in an image as mapped to object space (on the nanophotonic device).

**Field of view (FOV)** - The field of view that the camera lens and camera sensor achieve. In other words, the size of the image recorded by the camera sensor as mapped to object space.

**Manufacturing Throughput** - the throughput of the manufacturing line which is either areal ($m^2$/s) in the case of wafer-scale manufacturing, or linear (m/s) in the case of R2R manufacturing. S2S manufacturing may operate under both either areal or linear throughput.

**Allowable Characterization Time** - the time the NFM has to conduct its characterization for each wafer, sheet, or line segment of a roll

**System Characterization Time** - the time the NFM actually takes to conduct its characterization for each wafer, sheet, or line segment of a roll

**Nanofabricated polarizer** - a polarizer which is based on metallic lines which are nanoscale in width and macro-scale in length

**Metal mesh grid** - a transparent conducting surface which based on a grid of nanoscale metallic lines

**Anti-reflector** - a nanophotonic device which is anti-reflective due to the presence of nanostructures

**Perfect absorber** - a nanophotonic device which is highly absorbing over any specific range or ranges of spectral bands

**Perfect reflector** - a nanophotonic device which is highly reflective over any specific range or ranges of spectral bands

**Nanostructural color** - a nanophotonic device which has a color which arises due to the presence of nanostructures nanostructures.

### Systems and Methods

Manufacturing lines are being created to fabricate a variety of nanophotonic devices on both wafer-scale and roll-to-roll (R2R). Metrology is needed for these manufacturing lines that is both high resolution, and high throughput so that real-time characterization can be done on the devices which capture small defects and subtle area-to-area variations. It is shown that critical dimension (CD) metrologies are far too low throughput to be good candidates for high throughput nanophotonics manufacturing. Instead, functional metrology, in this case, imaging spectrophotometry, is the ideal metrology for high throughput nanophotonics manufacturing because it is both high resolution and high throughput. Configurations of imaging spectrophotometer systems for high-throughput are discussed in detail for a variety of specific types of nanophotonic device manufacturing scenarios, each with their own unique metrology needs. The high resolution spectral images provided by these systems provides a wealth of data that can be utilized for defect detection and root-cause analysis which assists yield management.

Functional metrology - which as the name implies measures the function of the device, in this case optical function - can be used instead, and is capable of much higher throughput. Functional metrology is routinely used in the semiconductor industry in the form of electrical testing of chips. An electrical test can be done in seconds which can qualify a chip comprised of billions of individual transistors, vias, and interconnects all with important CDs. One could argue that if a chip passes electrical testing it can be assumed that the CDs are at specification without needing to directly measure them. Now, because chip manufacturing lines have hundreds of individual fabrication steps CD metrology at intermediate steps is still necessary, but in nanophotonics manufacturing completed devices can require just a handful of fabrication steps (~5). It is most efficient to do functional metrology on the completed nanophotonic devices without intermediary CD metrology. Functional metrology for nanophotonic devices is done by measuring their optical function via spectral imaging. Using spectral imaging, optical functions such as transmittance and reflectance can be measured at many points in an area of a device at multiple spectral bands, polarization states, illumination angles, and/or viewing angles forming a collection of 3-dimensional data sets which are referred to as optical function maps. Note that for simplicity, the illumination and viewing angles are not be mentioned in every case.

### Choosing the right type of spectral imaging for throughput

There are many ways to do spectral imaging [20], and choosing the right method is crucially important for maximizing throughput. Some of these systems are discussed below. Note that, although the names are very similar, in today's industry they refer to different system architectures.

### Traditional Spectrophotometer [21-24]

Using a traditional spectrophotometer measures points on a sample sequentially, and in one spectral band at a time. These instruments are limited to measuring points and spectral bands sequentially because they employ just a single photomultiplier tube sensor. They can be adapted to spectral imaging by scanning the instrument in 2 spatial dimensions and also in the spectral dimension - this method has extraordinarily low throughput and is not intended for spectral imaging purposes.

### Traditional Spectrometer (whiskbroom)

A traditional spectrometer measures points on a sample sequentially, but collects the entire spectrum simultaneously using a 1D photodiode array. These systems can be adapted to spectral imaging by scanning in the two spatial dimensions. This is called the whiskbroom method. Whiskbroom systems are much faster than traditional spectrophotometers, but are still very slow in general.

### Imaging Spectrometer (pushbroom)

Faster yet, are imaging spectrometers which are specifically designed for spectral imaging. These systems take advantage of the fact that one line of an image can be dispersed onto a 2D photodiode sensor allowing for simultaneous imaging of the line across the entire spectrum. This is often called the "pushbroom" method. The object is translated in the columnar direction so that a spectral image can be formed. The pushbroom can be thousands of times faster than the whiskbroom, but still considering that there are thousands of columns in an image sensor and the pushbroom must stop to expose each one, it is still relatively slow.

### Imaging Spectrophotometer

Ideally all the rows and columns would be captured simultaneously at every spectral band. Unfortunately, there is no way to disperse 2D images in a way that produces separate images of each spectral band. Ultimately a spectral imager must scan in either the spectral or the spatial dimension. The throughput is much better if the scan is done in the spectral dimension, because the number of scan iterations is usually significantly smaller - while there are usually thousands of pixel columns that need to be addressed, there's usually no more than a few hundred spectral bands, and sometimes there are just a handful. In spite of this, the pushbroom system is often utilized in other applications, because they must deal with the sample being illuminated by broadband light (the earth's surface, astral bodies, etc.) which means the dispersion must happen *after* sample illumination, which forces the scanning to take place in the spatial dimension. Fortunately, in nanophotonics metrology the "burden" of illuminating the sample is on the system, making it possible to do the dispersion prior to sample illumination, moving the scanning into the spectral dimension. This situation is analogous to traditional spectrophotometers, which illuminate the sample with light of a narrow spectral bandwidth. Thus, its imaging counterpart is termed the imaging spectrophotometer.

### Factors affecting throughput in the imaging spectrophotometer

Imaging spectrophotometry has superior throughput compared to other methods of spectral imaging, but its own throughput still needs to be maximized. This starts by understanding the primary factors controlling its throughput.

The required exposure time of the camera, the number of required spectral bands, the number of required polarization states, and the camera's field of view (FOV) are the primary factors affecting the throughput. The FOV is to be made as large as possible while maintaining the necessary spatial resolution so that maximal area is characterized in a single exposure. If the FOV is too small to characterize enough device area, the FOV can be scanned over the total device area or multiple cameras can be used to track multiple FOVs simultaneously. The number of spectral bands and polarization states that need to be measured are dictated by the device characterization requirements. Each spectral band and polarization state requires its own camera exposure so the throughput decreases by a factor of the total number of polarization states times the number of spectral bands. Time is also spent moving between spectral bands and polarization states which further decreases throughput. The exposure time is dictated by how long it takes the camera to get a signal with suitable signal to noise (S/N) from the illuminated sample. The exposure time is kept as small as possible - but weak signals, like those seen in WGPs - demand long exposure times. The gain on the camera can be increased to decrease the required exposure time at the expense of adding noise to the measurement and adversely affecting S/N. For this reason, it is recommended to use the least amount of gain and the longest exposure time which satisfies the throughput requirements. The maximum allowable exposure time can be calculated depending on the manufacturing throughput. This is shown for two device manufacturing scenarios below (in the section titled "Examples of Using Imaging Spectrophotometry for Specific Nanophotonic Device Manufacturing Scenarios").

### Generalized nanophotonic device characterization

Each nanophotonic device has optical functions that must be measured in order to characterize the device's performance. In general, optical functions fall into one of two categories, transmittance and reflectance. Each optical function requires measurement of the light that has interacted with the sample (sample measurement) and of the light before it has interacted with the sample (reference measurement). It is the ratio of sample/reference that determines the value of the optical function. Optical functions can be measured at a variety of different spectral bands, polarizations, illumination angles, and viewing angles. The minimum number of spectral bands and polarization states necessary for characterization should be used.

### NFM System Measurement Process

The following list describes the measurement conducted by an NFM system:

1. One or more light sources produce light
2. The light from the light source(s) may or may not be guided or modulated by optical components (oftentimes at this point a lens is used to focus or collimate the light from the light source)

3. The light then interacts with the nanophotonic device and/or the reference

4. The light after which it has interacted with the nanophotonic device or the reference may or may not be guided or modulated by optical components. (usually at this point a lens focuses the light onto the camera sensor).

5. The light then is detected by the camera sensor(s) during an exposure time

6. The camera sensor reading(s) is(are) then read out as images to a computer

7. The images are processed to calculate intensities (see section titled image processing)

8. The intensities are used to calculate nanophotonic properties

### Image Processing

The images from the camera acquisitions need to undergo some processing to turn them into intensity images so that they can be used to calculate nanophotonic properties. There are a few reasons why this must be done. For one the dynamic range of camera sensors can be relatively small. In order to measure a large range of light levels, a combination of neutral density (ND) filters, Irises, and the exposure time and gain settings on the camera are used. Really bright measurements, like reference measurements, require ND filters and/or an iris to attenuate the beam such that an exposure time within the camera's range of usable exposure times can be used. On the other hand, really dim measurements can be so dim that the camera can only get an image by using long exposures and/or high gain and thus no ND filters are needed. The difference in gain, exposure time, and the presence of ND filters or Irises needs to be accounted for in the calculation of intensities. Also, the read noise and dark noise of the camera needs to be taken into account as well. The images undergo the operation seen in the following equation to produce an image of the intensity.

$$I = (DN - Noise_{read} - Noise_{dark}) * \frac{10^{Gain/10}}{t_{exp}} * T_{ND} * T_{Iris} \qquad \text{(Eq. 10)}$$

Where:

| | |
|---|---|
| **I** | Intensity |
| **DN** | Stands for digital number (a pixel value in the image) |
| **Noise$_{read}$** | The read noise of the camera |
| **Noise$_{dark}$** | The dark noise of the camera |
| **Gain** | Camera gain |
| **t$_{exp}$** | Camera exposure time |
| **T$_{ND}$** | Transmittance of the ND filter |
| **T$_{Iris}$** | Transmittance of the Iris |

This image of intensity values can then be compared directly to any other image of intensity values and can be used to calculate nanophotonic properties like those listed in Table 1 in the Definitions section.

### General Points on Architecture

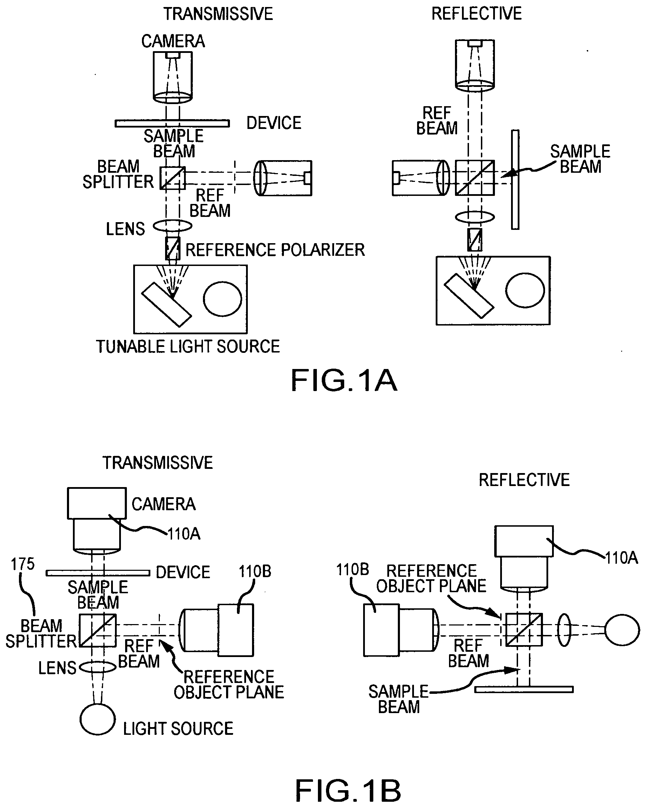

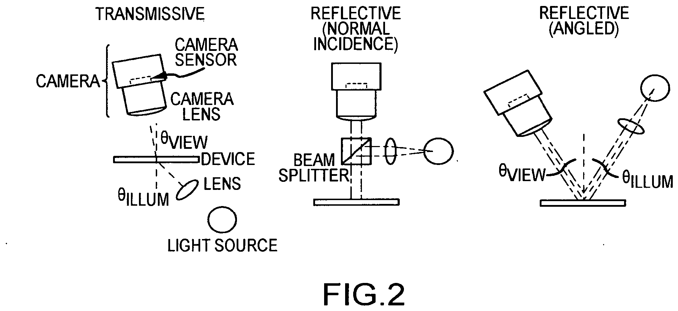

Every system contains the same fundamental components: A tunable light source, a reference polarizer, a beam splitter, beam optics, and two or more cameras. The tunable light source creates a beam of light in a chosen spectral band often by using a diffraction grating monochromator. The beam is made circular, collimated by a lens, polarized by a reference polarizer (optional), and then it is passed through a beam splitter which splits the beam into a reference and sample beam. The reference beam is imaged by a camera. The sample beam can be divided into multiple sample beams which illuminate the sample in different fields and are then imaged by the camera(s). The general system layouts for both transmittance and reflectance measurements are shown in Figures 1A and 2.

An NFM system is comprised of light source(s), optical components, and camera sensor(s):

### Light Source(s)

One or more light sources are used to produce light which illuminates the nanophotonic device. The light sources need to be chosen to have appropriate spectral characteristics, intensity, and form factor. Any number of different types of light sources may be used depending on what makes the most sense for the given situation. Some examples of light sources include: Incandescent light source, halogen lamp, arc lamp, a fluorescent lamp, LED (light emitting diode), white LED, array of LEDs, OLED (organic LED), tunable light source, laser, tunable laser, supercontinuum laser.

### Optical Components

In most systems there will be optical components to guide and modulate the light as it travels from the light source, to the sample, and to the camera. Various optical components may be utilized to get a particular result including the following: lens, polarizer, beamsplitter, mirror, semi-transparent mirror, focusing mirror, diffraction grating, color filter, iris, aperture, or slit.

### Camera Sensor(s)

Camera sensors, which are array detectors, are used as opposed to non-array detectors because they enable fast, simultaneous acquisition of spatially resolved measurements. It's important for the characterization to be spatially resolved so that defects can not only be detected but also identified in terms of their spatial signature. This allows for differentiation between different types of defects (round, linear, periodic, etc.) which allows insight as to where the defects originated (root-cause analysis). Most classic spectrophotometer systems use non-spatially-resolved detectors [21,22,23,24].

Figure 1A shows simple designs of NFM systems for both transmissive, normal incidence reflective measurements, and angled reflective measurements. The systems shown contains the three components just mentioned. Note that these systems are shown with a single beam architecture - later we will discuss the advantages of using a dual-beam architecture. The ability of the system to define the state is partially illustrated in the various examples by showing the beam having different colors and incidence angles and the camera having different viewing angles. Various optical components like lenses and beam splitters are used to make each setup possible. Note that this figure does not exhaustively illustrate all the various states and optical components that can be utilized. For instance, the polarization content of the beam is not illustrated in Figure 1A. Note that the combination of the camera sensor and the camera lens is often just referred to as a camera. This is shown in Figure 1A, and throughput this document we may use the term camera to identify this subsystem.

### System Design

When designing an NFM system, one goal is to make sure that the system is capable of performing general inspection, defect detection, and defect identification on the nanophotonic device(s) it is intended for. There are a few primary considerations here:

1. The required spatial resolution
2. The required nanophotonic properties that need to be measured
3. The form factor and type of manufacturing motion of the production medium (continuous roll, stop/start)
4. The areal or linear throughput of the manufacturing line

### Required Spatial Resolution

The required spatial resolution is the most fundamental consideration. The minimum object space pixel size that needs to be measured must be determined and the spatial resolution of the camera needs to be matched to this appropriately. The minimum object space pixel size is determined by the required spatial resolution needed to detect the desired defects in the nanophotonic device. This stems from knowledge of how defectivity manifests itself in the nanophotonic device the system is being designed for. For instance, NFPs and MMGs may be intended for use in displays, so it would make sense to set the minimum object space pixel size to that of something on the order of the size of pixels in displays to make sure that every area which corresponds to an individual display pixel is meeting specifications. Individual defects may actually be much smaller than the spatial resolution of the NFM, but their collective effect will be measured by the NFM as a difference in the nanophotonic property in the pixel within which that defect is located. The resolution capabilities and imaging properties of the camera lens need to be considered so that the full resolution of the sensor can be utilized. In general, a camera lens should be chosen which can achieve the desired minimum object space pixel size with the maximum FOV.

### Required Nanophotonic properties that need to be Measured

The type of nanophotonic properties that need to be measured must be considered. This will determine system measurement architecture such as its ability to measure either reflectance and/or transmittance, and system characteristics such as polarization/spectral content of the illumination, the spectral selectivity of the detector, angles of illumination, viewing angles, etc. For instance, NFPs may be characterized by the following two nanophotonic properties: 1. Contrast ratio and 2. Transmittance of p-polarized light. This involves images of 1. The WGP transmitting p-polarized light, 2. The WGP transmitting s-polarized light 3. The reference images to go with them. This system will need to be set up in transmission mode and will need the ability to polarize the light irradiating the WGP.

### Dual Beam Architecture

A dual-beam architecture should be used. In a dual-beam system, reference and sample measurements are made simultaneously (illustrated in Figure 1B) which eliminates measurement noise caused by fluctuations in the beam intensity. On the contrary, single beam systems must take sample and reference measurements sequentially, creating a vulnerability to these fluctuations. The optics in the reference beam should replicate the optical path lengths used in the sample beam, except that the object plane in this case is an imaginary plane (notated by the dotted line in Figure 1B) which is the same distance from the beam splitter center as the device surface. This assures that each camera pixel in the reference beam path is seeing that portion of the beam which corresponds the same pixel in the sample beam path. The relative alignment of the reference and sample cameras in all three dimensions is important so that the pixels correlate well with one another.

A dual beam architecture of two cameras (110A, 110B) can also be used to reduce the system characterization time. In a dual-beam system, reference and sample measurements are made simultaneously (illustrated in Figure 1B) which eliminates the additional time that comes with doing the measurement sequentially and also eliminates measurement inaccuracy caused by fluctuations in the beam intensity that may occur between the two measurements. In the dual-beam system, a beamsplitter (175) is used to split the light coming from the light source into two different beams - a sample beam and a reference beam. The sample beam goes through the nanophotonic device and the reference beam goes to a camera which measures it as the reference. The optics in the reference beam should replicate the optical path lengths used in the sample beam, except that the object plane in this case a reference object plane which is either an imaginary plane (notated by the dotted line in Figure 1B) or a reference object (like a mirror) which is the same distance from the beam splitter center as the device surface, and the reference camera should be the same distance from the reference object plane as the sample camera is from the sample plane. This assures that each camera pixel in the reference beam path is seeing that portion of the beam which corresponds to the same pixel in the sample beam path. This assures successful image calculation of nanophotonic properties. Figure 1B shows the dual-beam architecture for both transmissive and normal incidence reflective NFM systems.

### Binning

Binning can be used to increase the throughput of the NFM system. Binning is term used to describe down-sampling image resolution which is done by grouping multiple pixels together in the camera sensor as one. This reduces the spatial resolution, but allows for faster camera readout speed. This may prove to be suitable for defect detection, while the lack of spatial signature may reduce the ability to identify defects and link them to root-causes.

### Multi-System Architecture

If possible, it is most efficient to use one entire system (light source and camera) for each optical function that needs to be measured. This allows multiple optical functions to be measured simultaneously instead of sequentially. It also eliminates time spent moving parts to change the polarization state or the spectral band and the alignment errors incurred by doing so. For instance WGPs require characterization at two different polarization states. One system should be used for each polarization state to maximize throughput. Additionally. it can be useful to use separate systems for different spectral bands if there are a small enough number of spectral bands to be examined. It is possible to extract multiple spectral bands from the same light source using multiple monochromator exit slits.

### Continuously Rotating Diffraction Grating

It is common in traditional spectrophotometers to rotate the diffraction grating in the monochromator in a rotate-stop-rotate-stop fashion. The time spent rotating between different orientations usually takes about 0.1 s and if there are many spectral bands to be measured this could significantly impact throughput. Particularly in situations where large continuous portions of the spectrum must be scanned at high spectral resolution, it is recommended that the diffraction grating be continuously rotated and the spectral bands be windowed by the camera's frame rate. This sets $t_{grat}$ equal to zero in Equation 1. The monochromator slit size must be smaller than the desired spectral band in order for this to work. In cases where a handful of separated spectral bands need to be measured, the traditional rotate-stop-rotate-stop is still useful.

### Continuously Rotating Diffraction Grating

It is common in tunable light sources to rotate the diffraction grating in the monochromator in a rotate-stop-rotate fashion. The time spent rotating between different orientations can take a significant amount of time and if there are many spectral bands to be measured this could significantly impact throughput. In multi and hyperspectral situations, it would be beneficial to the system throughput to rotate the diffraction grating continuously and define the spectral band's width via the camera's exposure windows. Since the grating motion in this setup is continuous there is no time spent time moving between different spectral bands. In cases where a handful of separated spectral bands need to be measured, the traditional rotate-stop-rotate-stop method is still useful.

### Transmissive vs Reflective Architecture

Devices are usually either characterized by transmittance or reflectance measurements. The respective architectures for both the transmissive and reflective systems are shown in Figure 1A. The main difference is that in the transmissive system, the portion of the beam that transmits through the beam splitter is used as the sample beam, whereas in the reflective system the reflected beam is used as the sample beam. In the reflective case, the beam splitter must be used in this way in order to measure normal incident light reflecting from the sample. It is recommended that a 90/10 beam splitter (or higher) be used in the transmissive case, so that most of the original beam intensity remains in the sample beam. The best option for the reflective case is a 50/50 splitter since the sample beam passes through it twice.

### When more than one field of view is needed

In many cases the FOV of one camera is too small to cover a suitable amount of total device area. In this case multiple fields need to be characterized independently. The camera and beam can either be moved together to other areas of the sample (scanning) or multiple cameras and beams can be used simultaneously (parallelization). Parallelization is recommended when possible, because it eliminates the additional time moving the camera/beam. In order to do this the beam must be split multiple ways so that multiple regions of the sample can be illuminated. This decreases the intensity of each beam by a factor of the number of splits and each camera exposure is increased by same factor. Scanning requires the same increase in total exposure time, because it accumulates exposure time over sequential exposures, but additionally adds time for the camera/beam movement.

### Form Factor and Type of Manufacturing Motion

The production medium needs to be considered. In general, there are three types of production mediums: 1. Wafer scale, 2. Roll-to-roll (R2R), and 3. Sheet-to-sheet (S2S) processing that will be used for manufacturing of nanophotonic devices. Wafer scale involves fabricating the nanophotonic devices onto discrete wafers which typically start and stop as they move through the manufacturing line. R2R manufacturing involves fabricating the nanophotonic devices onto a continuous roll of material (usually plastic) which is being translated down the manufacturing line in a linear motion, oftentimes never ceasing motion. S2S manufacturing has elements of both of the previous manufacturing mediums where manufacturing is done on discrete sheets of material which may move continuously during their individual patterning steps but which may stop movement in between sheets. System components need to be chosen with these different form factors in mind. For instance, wafer scale manufacturing may lend itself better to area-capture cameras since the wafers typically stop moving in between manufacturing steps and one camera can potentially image an entire wafer in one frame. On the other hand, in R2R manufacturing as well as S2S manufacturing the device may be constantly moving in a linear motion in which case linescan cameras are probably more useful since they are well suited to taking images of linearly translating objects. However, it is possible, and may be more suitable in certain cases to use area-capture cameras for R2R and linescan cameras for wafer-scale.

### Manufacturing Throughput

The manufacturing throughput, whether it be areal or linear, must also be considered. Depending on the manufacturing scenario, as much as 100% of the total device area may need to be inspected at the speed of the fabrication line. On the other hand, sampling smaller amounts of the device area may be suitable. Either way, each manufacturing line demands a certain throughput from the metrology. The metrology must meet this throughput or else it will bottleneck the manufacturing line.

The manufacturing throughput (shown as $\text{Thru}_{manufacturing}$ in the equations) can be used to determine the allowable characterization time (shown as $t_{char,allow}$ in the equations). This is shown for the following two embodiments: In-line characterization for wafer-scale:

$$t_{char,allow}\left(\frac{s}{wfr}\right) = \frac{1}{Thru_{mfg}\left(\frac{wfr}{s}\right)} \qquad (Eq.11)$$

In-line characterization for R2R:

$$t_{char,allow}\left(\frac{s}{line}\right) = \frac{1}{Thru_{mfg}\left(\frac{m}{s}\right)} * h_{line}\left(\frac{m}{line}\right) \qquad (Eq.12)$$

Where $h_{line}$ is height of the line as defined by the object space pixel size. Note that for in-line characterization of R2R the roll cannot be made to go backwards so that the metrology may inspect another strip of the roll. Thus, the entire width of the roll may need to be inspected simultaneously as the roll goes by. The system characterization time which is the characterization time achieved by the system (shown as $t_{char,system}$ in the equations) must be less than or equal to the allowable characterization time. The system characterization time is comprised of many different factors described by equation 13.

$$t_{char,system} = \sum t_{acquisition} + \sum t_{move\ btwn\ states} + \sum t_{move\ btwn\ FOVs} \qquad (Eq.13)$$

Where:

$\sum t_{acquisition}$     Is the sum of all the individual acquisition times of every image at each state. The acquisition time is comprised of an exposure wherein the light is sensed, and a readout wherein the image is produced and given to a computer.

$\sum t_{move\ btwn\ states}$ Is the sum of the time spent moving between the states. This can be things like:

- Time spent rotating a diffraction grating to change the spectral content of the light in a tunable light source

- Time spent rotating a polarizer to change the polarization content of the light

$\sum t_{move\ btwn\ FOVs}$ Is the sum of the time spent moving between different FOVs so that the entire nanophotonic device area can be inspected. This is only necessary when the total sum of all the individual cameras FOVs are smaller than the total device area needing to be inspected.

$\sum t_{move\ btwn\ FOVs}$ can be entirely eliminated by deploying one entire system for each FOV that needs to be inspected. For instance, multiple linescan cameras can be placed along the width of a R2R line to inspect the entire roll as it rolls by instead of moving one camera to different points along the width of the roll. Similarly, $\sum t_{move\ btwn\ states}$ can also be eliminated by deploying one entire system for each state that needs to be characterized.

### Wafer Scale vs Roll-to-Roll (R2R) Architecture

### Wafer Scale

Obtaining optical function maps for wafer-scale metrology is generally straightforward. A field of the device is illuminated by a beam in a particular spectral band and polarization state and imaged with a camera. When multiple fields are needed, the system can either scan over the wafer or be parallelized.

### R2R

### Nanofabricated Polarizers on R2R

There can be several types of nanofabricated polarizers (NFPs). For example, wire-grid polarizers (WGPs) and metamaterial polarizers[1] are two types of NFPs. The WGPs are the exemplar NFP discussed in detail herein.

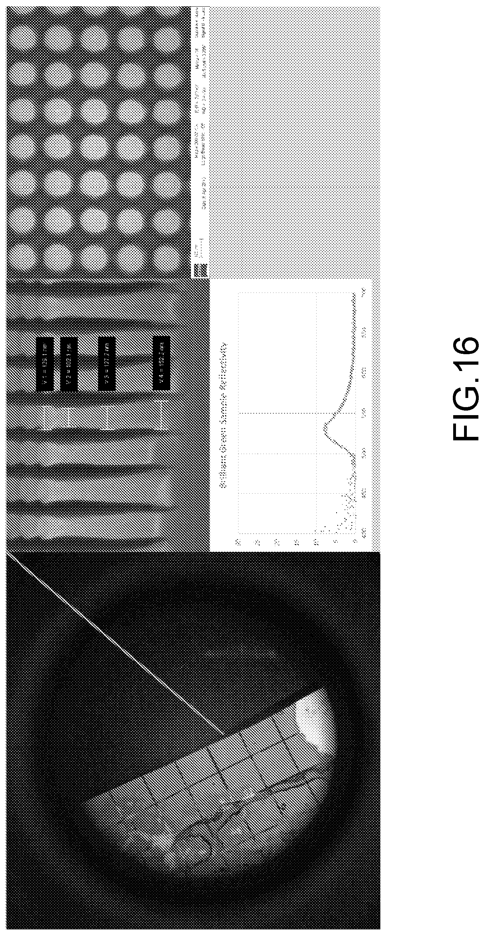

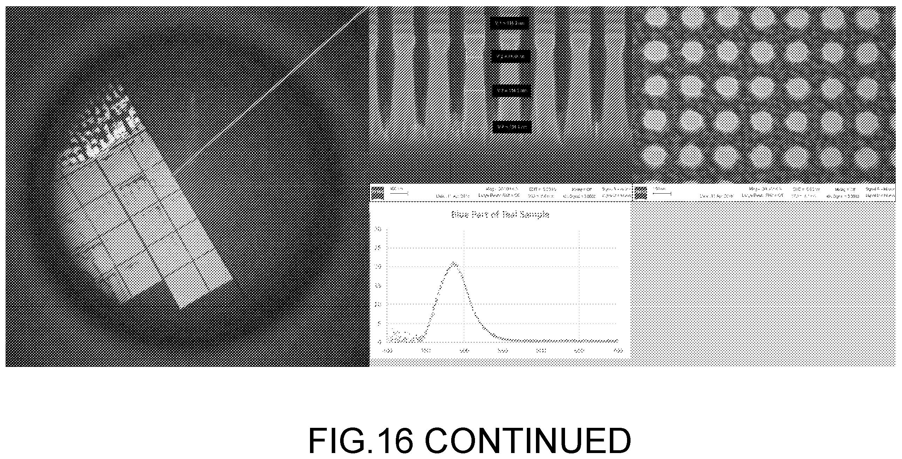

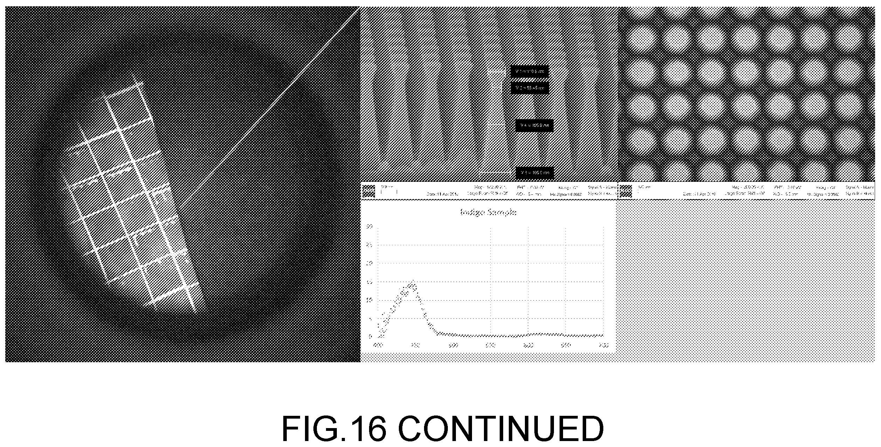

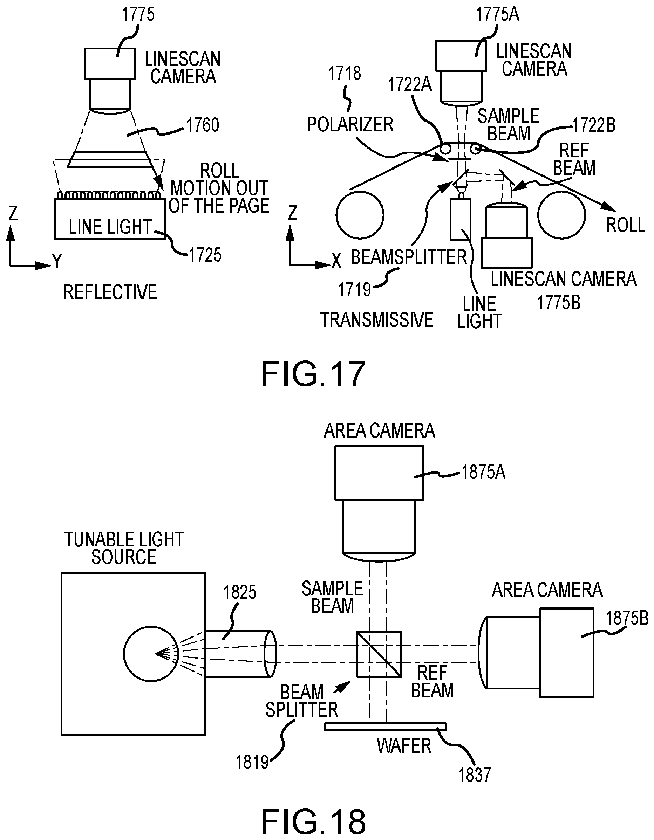

NFPs aim to compete with organic back film polarizers currently used in liquid crystal displays (LCD). The goal of a back polarizing film is to transmit light from the backlight while selectively passing p-polarized light. While organic film polarizers absorb s-polarized light, NFPs reflect it back (see Figure 16) creating an opportunity to recycle the light and improve power efficiency in LCDs. In order for NFPs to compete with industry polarizers, they must reach certain performance metrics which are as follows: A contrast ratio (CR) $\geq 10^4$ and a Transmission of p-polarized light (Tp) $\geq 84\%$. An SEM of a WGP is shown in Figure 17. Figure 18 illustrates the dual camera (1875A, 1875B) and tunable light source (1825) as discussed above with a beam splitter (1819) to image the wafer/sample/roll (1837).

R2R metrology adds the challenge of relative motion between the camera and the sample since the roll is moving. The pushbroom system seems like a natural choice for linear motion of this sort, but based on the significant throughput advantage of the imaging spectrophotometer, it is highly recommended that it be adapted somehow. This is achieved by eliminating the relative motion between the camera and roll. There are a few options for this:

### Use of a short exposure time

If the total characterization time is short enough, the camera can successfully capture the moving devices while remaining still. This situation is analogous to taking photographs of moving subjects. This is probably a situation that would only occur for devices needing to be characterized in one spectral band and polarization state.

### Stop the roll intermittently

If possible, the roll can be stopped intermittently to allow for the characterization. Sometimes this intermittent stopping is an inherent feature of the R2R line, like in some imprint lithography scenarios where the roll motion is stopped for the imprint step. If this stopping period is long enough, the metrology can characterize the device in this time. Otherwise, the roll can be stopped specifically for the metrology if it doesn't impact the factory throughput too much.

### Move the camera and beam along with the roll

### Synchronous Movement of the Camera and Beam Along with the Roll or Sheet

o If the roll cannot be stopped and the acquisition time is not quick enough to capture the moving subject without blur, the camera (1775) and beam (1760) can be translated synchronously with the roll to eliminate the relative motion. This is shown for both the transmissive and reflective cases in Figure 17. The camera can be reset after each forward motion. The setup of Figure 17 includes the above described beamsplitters (1719), linescan cameras (1725, 1775), and both are used to sample images of a specimen across rollers (1722).

o A camera can continuously characterize one column of the roll if the time it takes for the roll to proceed a length equal to the height of the field of view is equal to or less than the characterization time minus the time spent resetting the camera to its initial position.

o If one camera cannot cover enough of the roll it can either be scanned back and forth widthwise on the roll or the beam can be parallelized.

o The camera can simply be reset after each forward motion, but this movement will take time and it may need to be eliminated. In this case it is recommended that multiple systems located at different positions along the length of the roll be utilized which are staggered such that the latter systems characterize portions of the roll that the prior systems did not.

o This synchronous motion strategy can also be used in the case where transient behavior of the nanophotonic device is in question. An example of this would be if the device needed to be measured while undergoing heat cycling or flexing while moving along a R2R system. An area-capture camera can be moved synchronously along with the roll as it undergoes these processes to allow for this.

### Use of cameras in cumulative line scan mode

Cameras can be used in cumulative line scan mode if they are treated as a large series of individual line scan cameras which accumulate pixel values for given lines of the roll. This can be imagined as follows: Each strip (widthwise) of the roll enters the camera's field of view at its first row of pixels, proceeds through each row of pixels, and then exits after the last row. During transit that strip of the roll is imaged by each row on the sensor for a total of thousands of individual exposures. The pixel values for each exposure are accumulated towards a total value. This technique is also sometimes called time delay integration.

This eliminates the need to translate the camera/beam synchronously with the roll, possibly eliminating blurring due to asynchronous motion.

A typical image sensor has ~2000 rows. These 2000 rows can be divided up for the number of spectral bands that need to be addressed (e.g. 10 spectral bands would get 200 rows each). Following from this example, instead of taking one long exposure, 200 short exposures are taken and the pixel values are accumulated. Each short exposure is significantly noisier than the long exposure, because the camera's read noise is independent of pixel value, but by taking so many images the noise is mitigated.

There are two primary requirements for this method to work. First, the frame rate of the camera needs to be fast enough to take still images of the moving roll without significantly blurring them. Second, the fast exposure is long enough such that the pixel values in the frames are higher than the noise floor.

Noise can be determined statistically based on the noise of individual measurements and goes as the square root of the number of images taken. The noise of cumulative line scan measurements overcome the noise of individual long exposures if enough individual images are taken.

Increasing the camera gain can be used to bring the signal above the noise floor at the expense of other added noise. Alternatively, instead of accumulating the pixel values, they can be averaged over the many images taken.

The roll also has the potential problem of wobbling up and down in the out-of-plane direction possibly resulting in out-of-focus images taken by the camera. This can potentially be solved by using extra rollers to eliminate long stretches of unsupported roll, or by sliding the roll over a backing plate. This could simply be a smooth surface or bearing surface like an air-bearing. In the reflective case the backing plate can be opaque, but in the transmissive case the backing plate would need to be transparent, made of glass or transparent plastic. Alternatively, a partial backing plate can be used which has an exclusion in it where the beam needs to pass through.

Registration marks can be placed on the roll somewhere and tracked with a camera to track roll movement in all three spatial dimensions in real time. Based on the data coming from this camera a control feedback loop can be established which either moves the roll to its nominal position or the sample beam and camera along with the roll.

### *Using Filters for Spectral Imaging*

Another method for doing spectral imaging is by selecting spectral bands using color filters. If broadband light illuminates the sample, the beam can then be split, sent through different color filters to select multiple spectral bands, and shone onto multiple cameras simultaneously. This technique can be advantageous for situations in which there are just a handful of wavelengths that need to be looked at and spectral scanning time must be eliminated. However, since the beam must be split multiple ways before it is filtered, each camera receives less light throughput which results in increased exposure time and/or gain. Alternatively, one could use a color camera. This is essentially the same concept as the separate filters, but assembled monolithically onto a single image sensor. These cameras usually have a Bayer filter pattern (Red, Green, Blue).

Both the color camera and the multiple filtered cameras have the ability to capture intensity information in multiple spectral bands simultaneously. RGB (Red, Green, Blue) coordinates can be used to represent colors familiar to the human eye. The RGB color space does not map 1:1 with spectral coordinates, but it has incredibly high color resolution in and of itself; 8-bit cameras can represent 16.8 million different colors. This incredible resolution exists in a narrower space than the spectral space; regardless high resolution implies that subtle differences can be detected so defects and CD variations in certain devices could be identified and measured. It is possible to understand how device defects manifest as differences in the RGB color space in certain situations. This has been demonstrated by taking RGB images of SiNW array samples illuminated with white light, like the one shown in Figure 16. In the RGB image, minor color differences can easily be seen, and are thus detectable. In SiNW arrays, these color differences are related to the CD's of the nanowires, and thus inferences can be made about the device geometry and the presence of defects. This argument also extends to tetracolor and any other useful combination of wide, overlapping color bands that would be useful. It can also be useful to calibrate an RGB system against spectral measurements.

### *Image Processing*

The dynamic range of camera sensors is relatively small (a few hundred). In order to measure a large range of light levels, a combination of neutral density (ND) filters and the exposure time and gain settings on the camera are used. Really bright measurements, like reference measurements, are bright enough to saturate the camera in microseconds which is well below the minimum exposure time of most cameras, so ND filters are used to attenuate the beam such that an exposure time within the camera's range can be used. On the other hand, really dim measurements can be so dim that the camera can only get an image with suitable S/N by using long exposures and/or high gain and thus no ND filters are needed. To normalize measurements, the pixel values in the image undergo the operation seen in Equation X producing a value which is proportional to the average light flux measured during the exposure interval.

$$I(i,j) = Pix(i,j) * \frac{10^{Gain/10}}{t_{exp}} * T_{ND}$$

Where I is intensity, Pix is pixel value, Gain is camera gain, $t_{exp}$ is camera exposure, and $T_{ND}$ is the transmittance of the ND filter. The (i,j) indices give the location of the pixel. Note that indices should be added for the spectral band, polarization, illumination angle, viewing angle etc.

***Dealing with Roll Wobble out-of-Plane***

In a R2R or S2S system, the web or sheet has the potential problem of wobbling up and down in the out-of-plane direction potentially resulting in out-of-focus images taken by the camera. This can potentially be solved by using extra rollers to eliminate long stretches of unsupported roll, by sliding the roll over a backing plate, or by using a camera lens which has sufficiently large depth of focus (for instance a telecentric lens). The backing plate could simply be a smooth surface or bearing surface like an air-bearing. In the reflective case the backing plate can be opaque, but in the transmissive case the backing plate would need to be transparent. Alternatively, a partial backing plate can be used which has an exclusion in it where the beam needs to pass through. There could also be some registration marks on the roll or sheet which allow for measurement of the z-position of the roll or sheet at any given moment, and the position of the camera or an optic could be moved in response to this to account for the change in position. (In sheet-to-sheet and wafer-scale systems, a chucking device based on vacuum or electrostatic holding forces may be used to provide such support).

***Dealing with Web Walk***

Registration marks can be placed on the roll and tracked with a camera or a laser system to track roll movement in-plane in real time. Based on this information a control feedback loop can be established which guides the roll back to its nominal position. This web-guiding can be done with a system such as the one provided by the company Roll-2-Roll Technologies (https://www.r2r-tech.com/content/web-guide-systems-overview).

***Constraining Viewing Angle Using Telecentric Lenses***

Cameras with normal lenses accept a range of angles of light coming from surfaces. The use of a telecentric lens will help constrain the range of angles to only those which are parallel or very close to parallel to the optical axis of the lens. This can be used in order to inspect specific viewing angles.

***Haze Measurement***

It is not possible to take a haze measurement according to the widely used ASTM D1003 standard [27] while using imaging techniques. ASTM D1003 defines haze as follows:

*"haze, n-in transmission, the scattering of light by a specimen responsible for the reduction in contrast of objects viewed through it. The percent of transmitted light that is scattered so that its direction deviates more than a specified angle from the direction of the incident beam.* " [27]

Instead, measurements of scattering efficiency above and below some desired cutoff angle (2.5° based on ASTM D1003) can be used. The sum of multiple measurements at a suitable angular resolution can be taken at different viewing angles above and below the cutoff angle and the ratio of the two sums can be used as a parameter that quantifies haze. This is shown in Equation 9.

The numerical aperture of the camera lens needs to be considered to determine the range of angles that will be imaged by the camera to make sure they align as needed with the cutoff angle. A low NA lens or a telecentric lens can be used to substantially reduce the range of acceptance angles to those which are very close to just the on-axis rays. This allows for effective probing of narrow ranges of viewing angles.

***EXAMPLES***

The following examples are set forth below to illustrate the devices, methods, and results according to the disclosed subject matter. These examples are not intended to be inclusive of all aspects of the subject matter disclosed herein, but rather to illustrate representative methods and results. These examples are not intended to exclude equivalents and variations of the present disclosure which are apparent to one skilled in the art.

**Example 1.**

**Example 1. Using Imaging Spectrophotometry for Specific Nanophotonic Device Manufacturing Scenarios**

Two exemplary device manufacturing scenarios were chosen for further analysis: wire-grid polarizers (WGPs) on roll-to-roll (R2R) and silicon nanowire (SiNW) arrays on wafer scale. The metrology system is adapted to each of these situations. Each situation has its own minimum device requirements and architectural nuances which help it to achieve suitable throughput. These two examples illustrate the variety of decisions that should be made when designing a system for a specific device like choosing the number of spectral bands, number of systems, number of fields, motion strategies, etc.

Equations for determining the number of fields and the maximum exposure time are given in both of the examples below for both wafer scale and R2R systems. These equations start with the manufacturing line throughput (either in wafers/hr or roll speed) and determine the required number of fields to cover the entire device area and the maximum exposure time that can be used. Note that these equations do not take into account the number of polarization states required for characterization, because in both exemplar scenarios only one polarization needs to be addressed by each system. The equations also leave out other variables like illumination angle and viewing angle. The variables used in the equations are listed and defined in Table 1.

**Table 1. Equations used to determine the number of fields and maximum exposure time.**

| Variable Name | Description of Variable |
| --- | --- |
| **General Variables** | |
| $h_{FOV}$ | Height of camera field (mm) |
| $w_{FOV}$ | Width of camera field (mm) |
| $A_{FOV}$ | Area of camera field (mm$^2$) |
| #fields | Number of fields needed for 100% coverage of device area |
| $t_{move}$ | Time it takes to move from one field to another (s) |
| $t_{field}$ | Maximum characterization time for one field (s) |
| $t_{grat}$ | Time it takes to move between spectral bands (s) |
| #$\lambda$'s | Number of spectral bands required for characterization |
| $t_{exp}$ | Maximum allowable exposure time (s) |
| **R2R Variables** | |
| $speed_{roll}$ | Speed of the roll (mm/min) |
| $t_{FOV}$ | Time it takes for the roll to move a distance equal to $h_{roll}$ (s) |
| $w_{roll}$ | Width of the roll (mm) |
| $t_{reset}$ | Time it takes to reset the position of the sample beam after characterization (s) |
| **Wafer Scale Variables** | |
| wfrs/hr | The number of wafers per hour the factory is manufacturing |
| $throughput_{metr}$ | The required throughput of the metrology (mm$^2$/s) for 100% characterization |
| $A_{wfr}$ | Area of one wafer (mm$^2$) |
| $t_{wfr}$ | Time allotted to characterize one wafer (s) |

**Wire-Grid Polarizers (WGPs)**

WGPs are a type of polarizer that aim to compete with organic back film polarizers currently used in liquid crystal displays (LCD). The goal of a back polarizing film is to transmit light from the backlight while selectively passing p-polarized light. While organic film polarizers absorb s-polarized light, WGPs (300) reflect it back (see Figure 3C) creating an opportunity to recycle the light and improve power efficiency in LCDs. In order for WGPs to compete with industry polarizers, they must reach certain performance metrics which are as follows: A contrast ratio (CR) $\geq 10^4$ and a p-polarized light transmission of $\geq$84%. This percentage could be greater than about 84 percent (i.e., greater than 81%, 82%, 83%). The CR is the ratio of p-polarized light transmission/s-polarized light transmission ($T_p/T_s$). An SEM of a WGP (300) is shown in Figures 3A-3B.

The system must be able to measure the optical functions $T_p$ and $T_s$ of the WGPs as they move along on the roll. One system should be used for each of the two optical functions so that the multiple polarization states can be measured simultaneously and $T_s$ alone governs the throughput. The exposure time for the $T_s$ state is too long to allow for cumulative line scan, so to eliminate relative motion between the sample beam and the roll, the synchronous translation strategy is used.

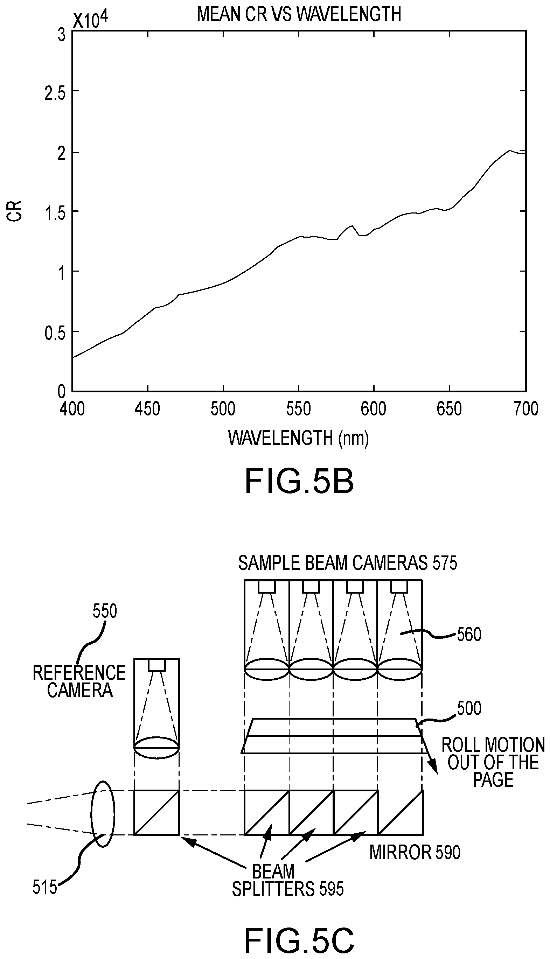

This situation was modeled for $10^4$ CR WGPs being manufactured on an 80 mm wide roll moving at 100 mm/min. Based on previous experiments, a FOV of 20 x 20 mm was chosen. WGPs do not have rich spectral information, and in fact it is known that they function better at longer wavelengths (see Figure 5B). Thus, it may only be necessary to measure one wavelength. However, three were included in this analysis for the sake of argument. Using the equations outlined below and the values in Table 2, the number of required fields and the maximum allowable exposure was calculated.

In order to calculate CR and Tp the system must acquire the following images: 1. The WGP transmitting p-polarized light, 2. The WGP transmitting s-polarized light, and the reference in both cases. In order to do this, one system will be used in which the light irradiating the sample has one or the other polarization state, each of which are dual-beam systems and measure the respective reference simultaneously. The system imaging the WGP transmitting s-polarized light will alone govern the system characterization time, because this measurement will require the longest exposure. We will just use white light to inspect the WGP because the WGP does not have a very useful dependence on spectral content.

Assuming a R2R manufacturing line fabricating NFPs moving at 100 mm/min. We will employ a line scan system to do this measurement. Assuming that this system uses one camera which has a wide enough FOV to image the entire width of the roll with an object space pixel size of 20 μm. Based on the roll speed and the height of the pixel, Equation 13 tells us that the allowable characterization time is ~12 ms/line. So, the system imaging the WGP transmitting s-polarized light needs to complete its characterization of each line in 12 ms. A typical linescan camera readout rate can be 100 KHz, so the readout time would be negligible, and since there will be no time spent moving between states nearly the entire 12 ms can be utilized for the camera exposure.

The system herein is illustrated in Figure 5C. Only one system is shown, but a duplicate system with the polarizer in the opposite state would be used further down the roll. Tp can be calculated from the information gathered by the first system according to Equation 1 and CR can be calculated from the Tp and Ts images acquired by each of the systems according to the second part of Equation 8.

**Table 2. Values for calculations regarding WGP manufacturing scenario.**

| | |
|---|---|
| $speed_{roll}$ | 100 mm/min |
| $w_{roll}$ | 80 mm |
| $A_{FOV}$ | 20 x 20 mm |
| $t_{reset}$ | 0.5 s |
| $t_{grat}$ | 0.1 s |
| $\#\lambda's$ | 3 |

$$t_{FOV}(s) = \frac{h_{FOV}}{speed_{roll}}$$

$$\#fields = \frac{w_{roll}}{w_{FOV}}$$

$$t_{field} = \frac{t_{FOV}}{\#fields} - t_{move} - t_{reset}$$

$$t_{field} = \#\lambda's * t_{exp} + (\#\lambda's - 1)t_{grat}$$

$$t_{exp}(s) = \frac{t_{field} - (\#\lambda's - 1)t_{grat}}{\#\lambda's}$$

The number of required fields is four and the maximum allowable exposure time is 0.767 s. To eliminate time moving a camera (575) back and forth to cover different fields, parallelize is used by using four sample beam/camera combinations (575). These four sample beams are positioned across the width of the roll (500) and are defined by a series of beam splitters (595) as shown in Figure 5C. The camera translates at 1.667 mm/s for 2.5 s for a total distance of 4.168 mm and then resets and waits for the new field to approach. Based on previous experiments, it was demonstrated that the $T_s$ measurement of $10^4$ CR WGPs can be done with an exposure time of ~0.150 s at 0 dB Gain. This means there is time to the acquire data and it is possible to characterize more than 100% of this R2R line using the suggested architecture. The structure shows the reference beam through lens (515) directed via beam splitter (595) for access by reference camera (550)

## Nanofabricated Polarizers on R2R

There can be several types of nanofabricated polarizers (NFPs). For example, wire-grid polarizers (WGPs) and metamaterial polarizers[2]B. Shen, P. Wang, R. Polson, and R. Menon, "Ultra-high-efficiency metamaterial polarizer," Optica, vol. 1, no. 5, pp. 356-360, 2014.are two types of NFPs. The WGPs are the exemplar NFP discussed in detail herein.

NFPs aim to compete with organic back film polarizers currently used in liquid crystal displays (LCD). The goal of a back polarizing film is to transmit light from the backlight while selectively passing p-polarized light. While organic film polarizers absorb s-polarized light, NFPs reflect it back (see Figure 3C) creating an opportunity to recycle the light and improve power efficiency in LCDs. In order for NFPs to compete with industry polarizers, they must reach certain performance metrics which are as follows: A contrast ratio (CR)$\geq 10^4$ and a Transmission of p-polarized light (Tp)$\geq 84\%$. An SEM of a WGP is shown in Figures 3A and 3B.

## Vertical Silicon Nanowire (SiNW) Arrays

SiNW arrays can be used to increase the sensitivity of a variety of gas, biological, and optical sensors. Depending on the geometry, the SiNW arrays can take on vibrant colors (seen in Figure 16). Because of the nanophotonic function, SiNW arrays can be characterized with imaging spectrophotometry.

An example of a reflectance spectra for SiNW array samples are shown in Figure 16. In general, changes in the diameter of the nanowires shifts the peak left/right. In Figure 16, the thickest nanowires correspond to the reflectance spectrum with the peak centered at the longest wavelength. Changes in the height of the nanowires shift the intensity of the peak up/down. The metrology system must be able to measure the spectral reflectance at enough wavelengths to define the location, spread, and magnitude of the spectral peak. The spectral peaks seen in Figure 16 can be resolved using just 10 narrow spectral bands (~5 nm each). The metrology checks to see if the peak has shifted or spread which signals CD variations in the nanowires and also for missing features which would likely produce a reflectance spectrum similar to that of the underlying Si substrate. The RGB images in Figure 16 show a great deal of variation in optical function implying subtle CD changes and areas where there is missing pattern.

This situation was modeled for a factory with throughput of 60 wafers/hr on 100 mm wafers. Again, a FOV of 20 x 20 mm was chosen. Using the equations below and the values in Table 3, the number of required fields and the maximum allowable exposure time was calculated.

This disclosure models the example for a factory with throughput of 60 wafers/hr on 100 mm wafers. From Equation 11 we calculate the allowable characterization time per wafer to be 60 s/wafer.

Based on previous experiments we have done, we choose a FOV of 20 x 20 mm. Given the area of the wafer and the area of the FOV it will take 20 different FOVs to cover the full wafer area. This means the system will have to move to a new FOV 19 times during the measurement. Based on a system we have used in our lab each move could take ~0.1 s making the sum time of the movements between FOVs equal to 1.9 s. If we want to characterize 10 different spectral bands there will be 9 movements between different spectral bands which also may take ~0.1 s each move or 0.9 s total in each FOV. Then this gets multiplied by the number of FOVs and we see that the total time spent moving between states will be 18 s.

From Equation 13 we calculate that there will be 40.1 s left for the total sum of acquisition times. Since there will be 10 acquisitions in each of the 20 FOVs (200 total acquisitions) that leaves 0.201 s for each acquisition. In our experience inspecting vSiNW arrays the camera acquisition times are significantly less than this (on the order of 10's of ms).

Table 3. Values for calculations regarding SiNW arrays.

| | | |
|---|---|---|
| wfr/hr | | 60 |
| | $d_{wfr}$ | 100 mm |
| | $A_{FOV}$ | 20 x 20 mm |
| $t_{move}$ | 0.5 s | |
| $t_{grat}$ | 0.1 s | |
| #$\lambda$'s | 10 | |

Wafer Scale

$$throughput_{metr} \left( mm^2/s \right)$$

$$= \frac{wfrs}{hr} * \frac{1}{3600} * A_{wfr}$$

$$t_{wfr}(s) = \frac{A_{wfr}}{throughput_{metr}}$$

$$\#fields = \frac{A_{wfr}}{A_{FOV}}$$

$$t_{field}(s) \leq \frac{t_{wfr}}{\#fields} - t_{move}$$

$$t_{field} = \#\lambda's * t_{exp} + (\#\lambda's - 1)t_{grat}$$

$$t_{exp}(s) = \frac{t_{field} - (\#\lambda's - 1)t_{grat}}{\#\lambda's}$$

The number of fields is calculated to be 20 and the maximum allowable exposure time to be 0.160 s. A simple scanning strategy is used to cover the multiple fields. Based on previous experiments, it was determined that the SiNW array devices require exposure times well below a typical camera frame rate even at 0 dB Gain, meaning that the situation is frame rate limited. For a 30 fps camera this places the capture time at 0.033 s. Thus, it is possible to characterize 100% of this wafer line with this architecture.

**General Notes**

It should be noted that on mature production lines the metrology usually does not need to characterize 100% of the product. A much smaller percentage of the product is characterized and statistics are used to relate this to the rest of the product, so this metrology does not necessarily need to hit the 100% target. Factory lines that are still being qualified however, need more extensive characterization, upwards of 100%, and thus 100% was targeted in this analysis.

**Diffractive Nanophotonic Devices**

Nanophotonic devices which have a diffractive functionality can be characterized with functional metrology in one or both of two ways: 1) by varying the camera's angular orientation with respect to the device and 2) by varying the angle of illumination of the device. Changing these angular orientations allows the system to characterize the ability of the device to diffract incoming light into a variety of angles. This of course can be done with respect to spectral band and polarization state.

**Defect Identification and Root Cause Analysis**

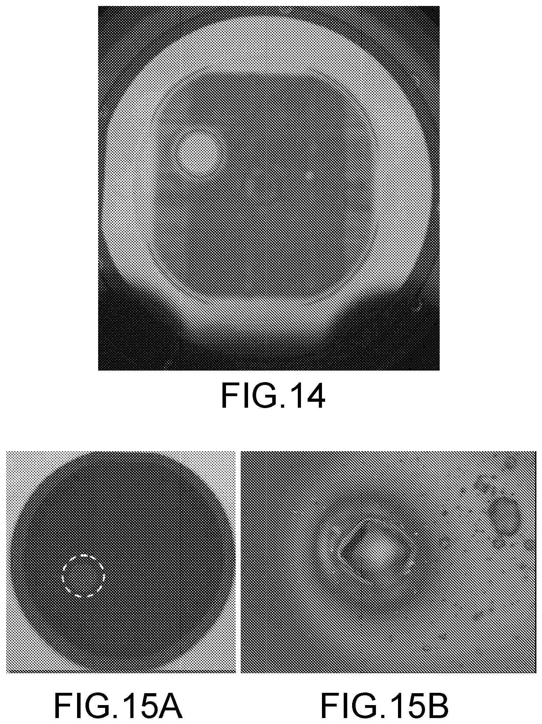

The spectral images of device functional quantities provide a wealth of information including not only the functional quantity itself but also how it varies over the device area and between separate devices (or areas of a roll). This information enables the identification of and between separate devices. These three defect signatures (functional, spatial, and temporal) enable identification of specific types of devices defects and allow for determination of what caused the defects. This is crucially important for running effective yield management in nanophotonic device manufacturing. Each potential fabrication error in each device fabrication process manifest themselves as specific types of defects in nanophotonic devices which often have unique signatures. The types of fabrication errors relating to some specific fabrication processes, the defects they create, and their signatures are tabulated in Tables 4-8. An example of a highly defective process run is shown in Figures 14- 15B. This figure has several defects that have been explained in Tables 4-8 below.

The images of device nanophotonic properties provide a wealth of information including not only the functional quantity itself but also how it varies over the device area and between separate devices (or areas of a roll or sheet). This information enables not only the detection of defects, but also the identification of defects within and between separate devices. Whereas detection simply signals the presence of a defect, identification adds knowledge about what type of defect the system has detected. The three defect signatures (functional, spatial, and temporal) enable identification of specific types of devices defects and allow for determination of the root-cause of the defects. This is crucially important for running effective yield management in nanophotonic device manufacturing. The types of fabrication errors relating to some specific fabrication processes, the defects they create, and their signatures are tabulated in Tables 4-8.

**Imprint Errors**

Errors in the overall imprint process can occur during drop dispense (Table 4) or the actual imprinting step (Table 5). These errors usually manifest as areas of missing pattern (due to pull off, trapped air, etc) or cause variations in the residual layer thickness (RLT) [17]. RLT variations result in CD changes since the RLT must be removed with a descum etch post-imprint in which features in regions where RLT is thinner become thinned down. Note that many of these errors can be identified immediately after the imprint has been done just by visually examining the quality of the imprint. For instance, adhesion failure is easily identifiable and the template must be cleaned before further use.

## Table 4. Inkjet System Errors

| Inkjet System Error | Description | Resulting Device Defect | Functional Signature | Spatial Signature | Temporal Signature |
|---|---|---|---|---|---|
| Full Clog | Nozzle doesn't jet | Missing features | Very poor | Linear, in direction of inkjet motion | Substantially Constant. May resolve. |
| Partial Clog | Drops shoot out at various angles decreasing precision and accuracy (vol. and placement). | CD variation | Variation | Linear, but blurry, in direction of inkjet motion | Repeating |
| Deviated Nozzle | Row of drops are shifted. Precision maintained, accuracy decreased (location only). | CD variation | Variation | Linear, in direction of inkjet motion | Repeating |
| Drooling | Random parts of wafer receive extra liquid volume. | CD variation / Missing features | Variation | Variety of shapes and scales | Random |
| Air trapped inside plumbing | Random nozzles stop firing. | Missing features | Very poor | Linear, in direction of inkjet motion | Worsens wafer to wafer |

**Table 5. Imprint Process Errors**

| Imprint Process Error | Description | Resulting Device Defect | Functional Signature | Spatial Signature | Temporal Signature |
|---|---|---|---|---|---|
| **Multiple-dispense pass alignment error (location)** | Alignment error in subsequent dispense passes | CD's larger on one half of wafer | Variation | Distinct regions separated by linear step | Repeating |
| **Fluid evaporation error** | Fluid evaporates unevenly | CD variation | Variation | Device scale | Random |

| | | | | | |
|---|---|---|---|---|---|
| | before imprint | | | | |
| **Substrate topography error** | Loss of precision in drop location | CD variation | Variation | Often device scale<br><br>Corresponds to wafer topography error | May repeat |
| **Substrate thickness error** | Causes loss of precision in drop placement | CD variation | Variation | Wafer scale | Non repeating |
| **Particle during imprint (see Figure 15)** | Particle causes exclusion zone during imprint | Missing features | Very poor | Roughly circular for single particle. Fuzzy Edges.<br><br>Smooth, but non-circ. for multiple particles.<br><br>Radius = ~1000x particle height. | Repeating.<br><br>Sometimes clean up after a few imprints<br><br>Disappears after template clean |
| **Template defect** | Template defects are created during template fabrication (e-beam) or through damage | Missing features<br><br>CD variation | Very poor<br><br>Variation | Variety of shapes and scales. | Repeating |
| **Air bubble** | Air gets trapped during drop spread | Missing features | Very poor | Very localized, usually micron scale. Well-defined edges. | Non repeating |
| **Adhesion failure** | Pattern fails to stay on substrate during separation | Missing features | Very poor | Catastrophe large | Random |

| Air paths in spread | Non-ideal spread results in outward air paths | Missing features | Very poor | Radial outward | Repeating |
|---|---|---|---|---|---|
| Feature collapse during separation | Features collapse | Missing features | Very poor | Not well-defined | Random |

There can also be errors created by non-ideal recipe parameters. The most important recipe parameters are the drop pattern, spread time, and the various imprint forces involved in an imprint. This can also involve mismatch of the drop pattern with any directionality in the template pattern, and can be especially enhanced when imprinting grating features for WGPs. Early work on simulation of the drop spreading process has captured effects of feature size and density on feature filling [18]. These errors and their effects are tabulated in Table 6. Note that all of these errors are repeating temporally, because they are set parameters.

**Table 6. Imprint recipe errors and the resulting defect/signature**

| Imprint Recipe Error | Description | Resulting Device Defect | Functional Signature | Spatial Signature | Temporal Signature |
|---|---|---|---|---|---|
| Non ideal drop pattern | The pattern arrangement of drops placed on the substrate | Missing features<br><br>CD variation | Very Poor<br><br>Variation | Local areas<br><br>Mid-high freq | Repeating |
| Spread time | Total drop spreading time | Missing features<br><br>CD variation | Very Poor<br><br>Variation | Localized<br><br>Sub-mm to mm scale | Repeating |
| Imprint Forces | Forces at the start, end, and ramp of the spread | CD variation | Variation | Device Scale<br><br>Sub-mm to mm scale | Repeating |

**Etch Process Errors**

Most nanophotonic devices need an etch step to transfer the mask features into the underlying substrate. A variety of known errors can happen in the etch process which are tabulated in Table 7 including etching too short/too long, etch profiles, and breakthrough issues.

**Table 7. Etch Errors and the Resulting Defect/Signature**

| Etch Error | Description | Resulting Device Defect | Functional Signature | Spatial Signature | Temporal Signature |
|---|---|---|---|---|---|
| Etch too short | Results in under etch | Device features too short | Off-target | Uniform over device area | Repeats with same etch time |
| Etch too long | Results in over etch | Device features too tall and shrunk | Off-target | Uniform over device area | Repeats with same etch time |
| Etch profile | Etch rate has a profile shape | Device feature CDs vary from center to edge of device | Variation | Center enter to edge (radial) | Repeats with same etch parameters |
| Etched at angle | Substrate was tilted during etch | Device features are slanted | Off-target | Uniform over device area | Repeating or non-repeating |
| Mask doesn't breakthrough | Etch does not go long enough to break through the mask layer | Missing features | Very poor | Patches on a variety of scales | Repeating |
| Particle | Particle masks the etch, preventing feature transfer | Missing features | Very poor | Circular. Close to size of the particle (typically sub-mm) | Non repeating |

**Glancing Angle Metal Deposition (GLAD) Errors**

One important fabrication step for making WGPs is GLAD of Aluminum onto a line space pattern which defines the metal lines. This process, similar to etch, can run too short/too long and has profile effects.

**Table 8. GLAD Deposition Errors and the Resulting Defect/Signature**

| GLAD Metal Film Deposition Error | Description | Resulting Device Defect | Functional Signature | Spatial Signature | Temporal Signature |
|---|---|---|---|---|---|
| Deposition Profile | Deposition rate has a profile shape | CDs vary from center to edge of device | Variation | Center to edge (linear) | Repeats |

| Deposition too short | Not enough metal deposited | CDs are too small | Off-target | Uniform over device area | Repeats with same deposition rate/time |
| Deposition too long | Too much metal deposited | CDs are too large, possibly bridging | Off-target | Uniform over device area | Repeats with same deposition rate/time |

## Example 2. Performing Root-Cause Analysis on Specific Devices

Once a batch of devices (or portion of a roll) has been characterized, the optical function maps can be used to identify defects along with their signatures. These signatures can then be used to match the defect to all its possible root-causes (whichever have identical signatures). Multiple matches can be identified as some of the process errors have similar signatures. With some experimentation (clean imprint template, change orientation of wafer during processing) and further insights (inkjets recently replaced, etch chamber reaching end of life, etc) specific root-causes can be identified and treated. This general process is outlined in the flow chart in Figure 5A.

Once a batch of devices (or portion of a roll) has been characterized, the nanophotonic property images can be used to identify defects along with their signatures. These signatures can then be used to match the defect to all its possible root-causes (whichever have identical signatures). Multiple matches may be identified as some of the process errors have similar signatures. With some experimentation (clean imprint template, change orientation of wafer during processing) and further insights (inkjets recently replaced, etch chamber reaching end of life, etc.) specific root-causes can be identified and treated. This general process is outlined in the flow chart in Figure 5.

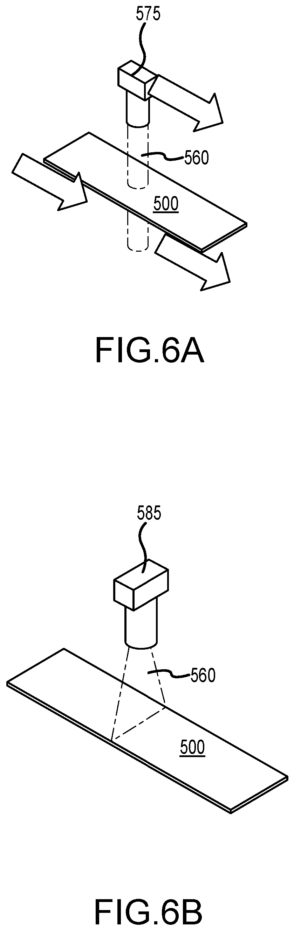

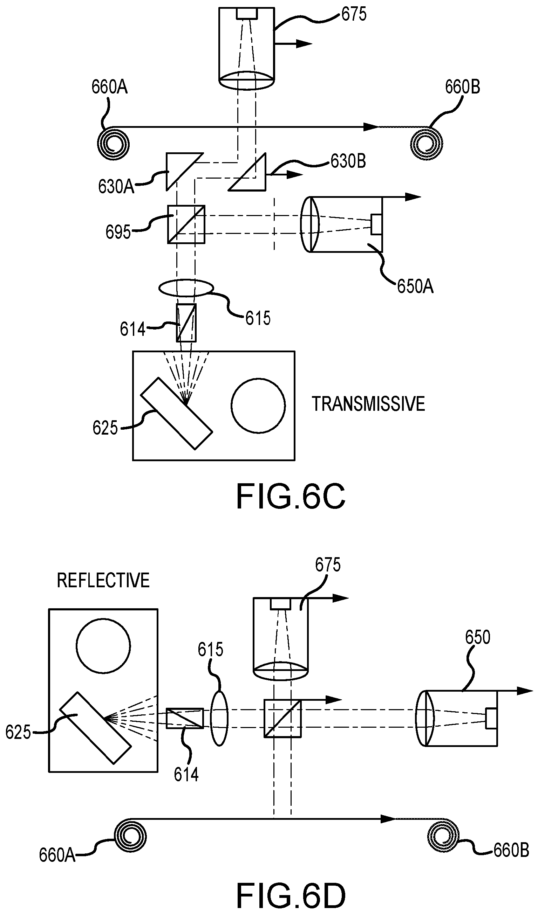

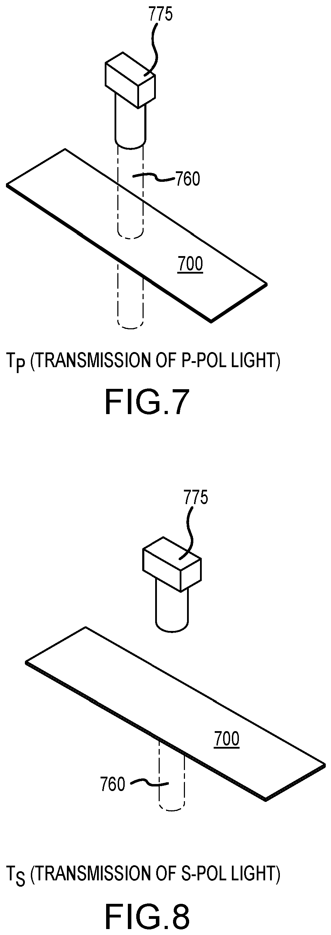

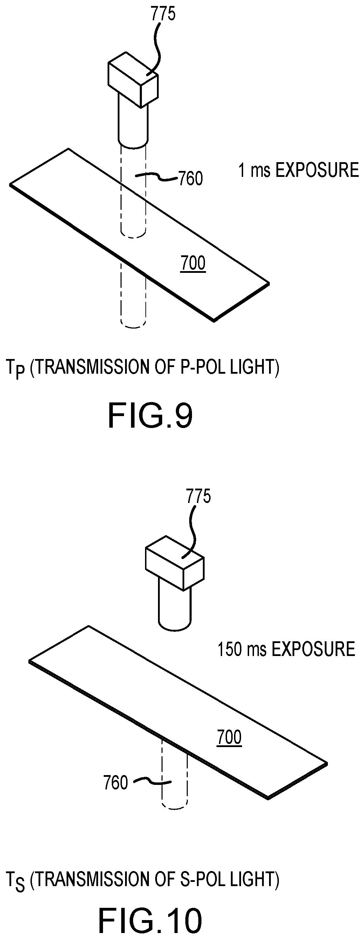

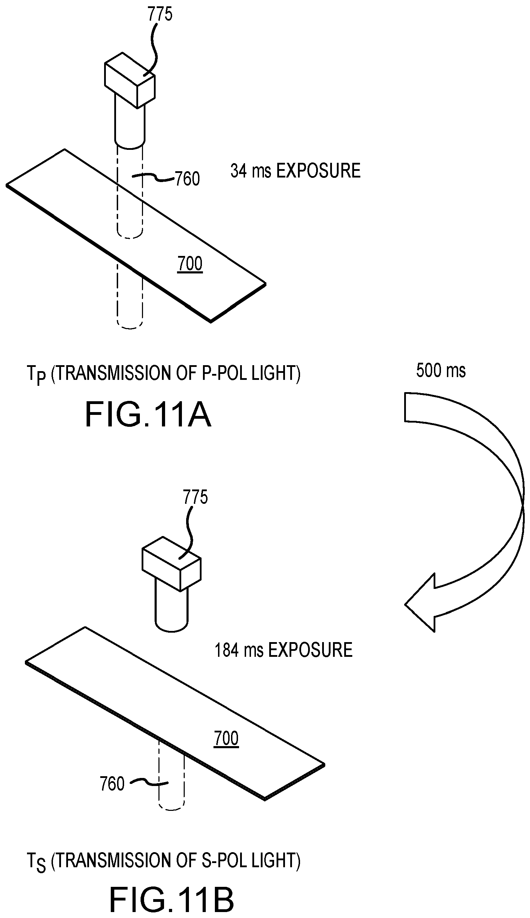

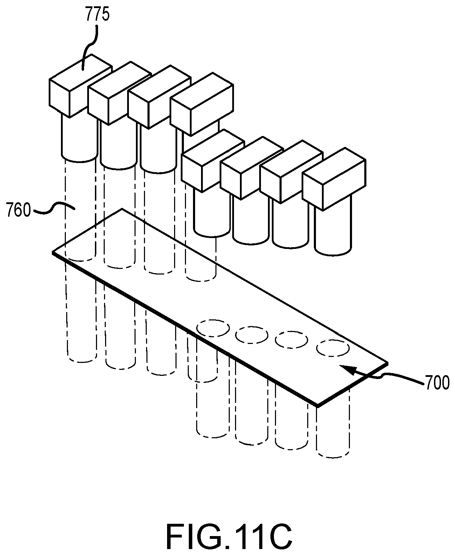

Figures 6-11 illustrate an R2R metrology architecture to account for a moving device as shown in Figure 6A (i.e., the reader 575 moves with the roll 500). This could be true for transmitted light (560) directed from the bottom of the roll (500) or reflected light (560) on the roll. Otherwise, another solution is to use a line scan camera (585), such as a time delay integration, as shown in Figure 6B. In Figs. 7 and 8, the camera (775) must expose long enough to get a good signal to noise ration. The camera gathers pixel data on a frame by frame basis regarding the roll in the camera field of view via the transmitted light (760) from the below through the roll (700) for Tp and then polarized light through a polarizer layer (700) to the reader (775). The exposure would be short for Tp (transmission of p-polarized light of Figure 7) but long for Ts (transmission of s-polarized light of Figure 8). Figures 9 and 10 illustrate calculating a CR and a Ts (CR=Ip/Is), so that only one measurement is needed for each polarization state. In one example, only a wavelength of 400nm needs to be measured because Ts and CR are higher at longer wavelengths. Figures 11A and 11B show that the camera/reader takes an additional 33 ms to read a frame at 30 frames per second to change the polarization state of the beam. This must be done across the fields necessary to cover the width of the roll. In one non-limiting example, the system adds about 500 ms for each move between fields. Variations of the system are embodied herein such as measuring the CR for two wavelengths by adding time (e.g., 500 ms) for changing the wavelength and adding additional time (e.g. an additional 500 ms) for changing the polarization again. The capture time is multiplied accordingly. Figure 11C shows a combination of the same wherein all of the movements except for wavelength changes could be eliminated by using two dedicated, parallelized systesm (one for Tp, one for Ts).

Details of the system are shown in Figures 6C and 6D for respective transmissive and reflective operations in which a rolling device (660A, 660B) is subject to a reference beam from a tunable light source (625) directed through a beam splitter (614) and lens or polarizer (615), second beam splitter (695), mirrors (630A, 630B) that are adjustable in separation distance, and a reader camera (675)

## Performing Root-Cause Analysis on a WGP

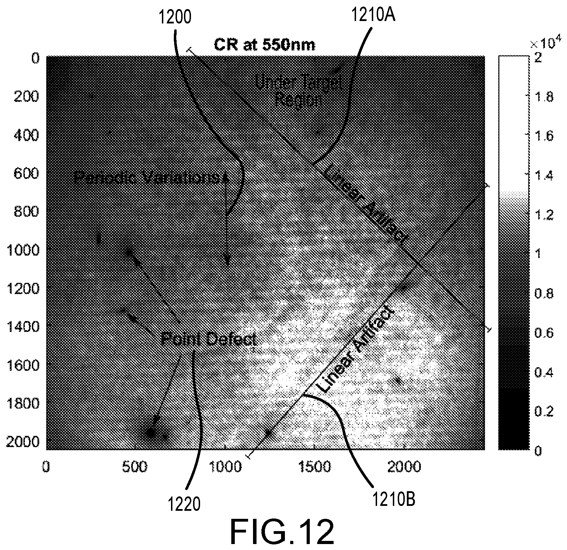

Figure 12 shows, according to an embodiment covered by the claims, the CR map in a 16x19mm field (2048x2448 pixels) of a WGP in a narrow spectral band centered around 550 nm as initially shown in Figure 4. The presence of many different defects (1200, 1210, and 1220) is observed each with unique functional and spatial signatures. Because only one device is being looked at, the temporal signature cannot be determined. This WGP has gone through the following fabrication processes: Metal deposition (normal incidence), Imprint, Descum, and Etch.

In other words, Figure 12 shows the CR map in a 16x19mm field (2048x2448 pixels) of a WGP in a narrow spectral band centered around 550 nm. This WGP was fabricated on a glass wafer. One can note the presence of many different defects each with unique functional and spatial signatures. Being that we are only looking at one wafer, we cannot determine the temporal signature. This WGP has gone through the following fabrication processes: Metal deposition (normal incidence), Imprint, Descum Etch (to break through the residual layer thickness from the imprint), and the Etch which transfers the imprinted features into the metal coated substrate.

In Table 9, according to an embodiment covered by the claims, root-cause analysis was performed following the procedure described above for some of the visible defects based on known process errors like the ones tabulated. In this case optical function is the CR of the WGP.

## Table 9. Defects seen in Figure 12, their signatures, possible root-causes, and tests.

| Defect Type | Description | Functional Signature | Spatial Signature | Possible Root Causes | Test |
|---|---|---|---|---|---|
| Point defect (1220) | There are many points where the features are clearly missing | Very poor | Localized, substantially circular, Variety of scales | **Particle during imprint**<br><br>Air bubble<br><br>Template defect<br><br>Direct scratch | Clean template to eliminate particles. If repeating could be template defect. |
| Periodic Variations (1200) | There is clearly a periodic pattern running top to bottom over entire field. The lines run in the direction of the WGP lines. | Variations | 0.4 mm period, directional in direction of WGP lines | Drop dispense error<br><br>**Anisotropic drop spreading (non ideal drop pattern)**<br><br>Template feature variations<br><br>Wafer topography | Test new drop pattern |
| Linear Artifact (1210A, 1210B) | Diagonal running linear artifact | Variations | Diagonal, very linear | Scratch on wafer<br><br>**Template artifact** | Test to see if it is repeating |

In all cases, there are many possible root-causes that have the functional and spatial signature of the defect. The lack of the temporal signature makes the root-cause analysis significantly more difficult. A column of the table describes what further tests could be run to help eliminate certain root-causes and in many cases this test is related to obtaining a temporal signature, expressing its importance.

### Point Defects

Clearly something caused missing features in these areas. Particles are ruled out during etch for the point defects identified in Figure 12, because particles during etch create affected areas roughly the size of the particles and these affected areas, which are sometimes almost a mm across, are much larger than normal particles. Particles during the imprint however, create affected areas much larger than the particles themselves so this could be a possible root cause. Air bubbles are also a possible root cause, but usually affect much smaller areas (micron scale) and usually don't produce a halo of lower CR surrounding the defect. The point defects could also be due to template defects, but usually these are not as substantially circular nor are they surrounded by halos. Regardless, if the template is cleaned and the point defects are not mitigated, this is evidence that the template could have permanent defects. The point defects, of course, could just be scratches that were made directly on the device through poor handling. This could be ruled out be making sure to handle the samples with the utmost care. Based on this analysis, the point defects are most likely due to particles during imprint.

The light scatters off of pinholes such as these point defects as it transmits through the WGP. This could have some contribution to the halo that is seen around the point defects. Also, these areas end up saturating the camera pixels causing some overflow. The contribution of these effects can be determined to make sure the halo is not entirely due to reasons other than particle exclusions during imprint.

**Periodic Variation**

A well-defined periodic pattern is seen running top to bottom in the image. This says that the CD's of the WGP lines are varying. The lines of this pattern are in the direction of the lines on the WGP, and since directional drop spreading happens in the direction of grating features, it was reasoned that this defect has to do with the highly anisotropic drop spreading. Furthermore, the periodic variation has a well-defined period of ~0.4 mm which corresponds well to the drop pattern that was used. Thus, this was identified as a spreading error caused by non-ideal drop pattern.

**Linear Artifact**

Linear artifacts are seen which run in both diagonal directions. The similarity of the artifacts running in each direction suggests they are related. However, the problem being related to drop dispense issues like deviated nozzles, clogs, and partial clogs cannot be ruled out because - although these have linear spatial signatures - they are only seen in one linear direction. The only process error known to cause this spatial signature are template defects. Templates are fabricated using e-beam and there can be linear artifacts created in this process along with a host of others. Template defects are numerous enough to warrant being defined on an individual basis.

**Threshold Tests for Defect Identification**

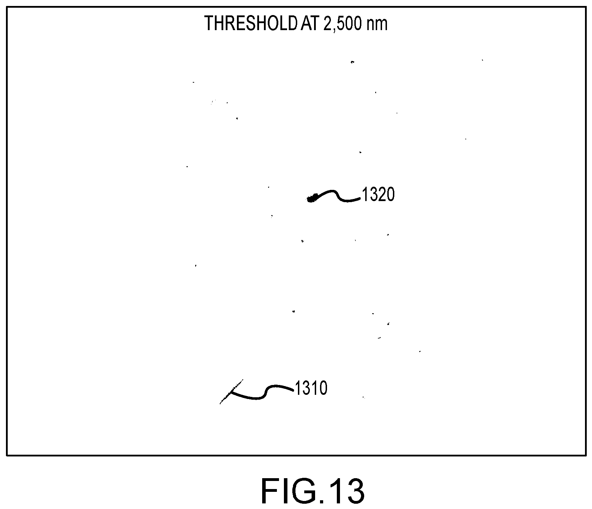

Simple thresholding tests can be used to determine the presence of certain types of defects and distinguish between different defect types. The tables above are for generalizing for all nanophotonic devices. For specific devices, the quantity of a functional property which is "very poor", or seen as "variation", or "off target" is defined based on the specific device. In WGPs for instance, a "very poor" functional property would either be a CR close to 1 (almost no polarizing effect), or a $T_p$ close to 0% (no transmission). These would be caused by catastrophic defects such as point defects in which the pattern is substantially compromised. A thresholding operation can be applied to the matrix which contains the data - CR for example - in which a value less than or equal to some small number like 2 is counted and values above 2 are ignored (see Figure 13). This transforms the matrix into a matrix which only contains defects (1310, 1320) that catastrophically affected CR. These defects are commonly point defects, so this method can be used to isolate point defects from other defects. "Off target" values can be identified by thresholding at a target value for device performance. For instance, WGPs need to have CR>10,000 and $T_p$>84% to meet industry standards. Thresholds could be placed at these values, and any values less than these would be identified as "off target". This can be used to identify areas of the device that are not passing quality control inspection. "Variation" refers to functional properties which vary in quantity around some value. Thresholding can be done at values of functional properties which are some significant statistical variation away from a target or mean value to identify area of the device that qualify as significantly varied from some nominal value.

**Spatial Frequency Domain Analysis**

Fourier analysis can be done on the 2D matrices that contain the functional property quantities to identify periodic patterns in the data. This is helpful for identifying certain spatial signatures which occur in certain types of defects. For instance, the periodic pattern seen in Figure 12 could be identified and the period and direction of the pattern can be quantified by using Fourier analysis.

**Computerized Equipment**

Each component described in various metrology architectures of this disclosure may be configured for connection to, operation with, incorporation of, or control of a computer associated with that component. Computers include all kinds of smart devices, without limitation, machines that include a processor, computerized memory, software, computer implemented instructions, and any automation that is accomplished by using computerized instructions stored on non-transitory computer readable media,

**Claims**

1. A large area functional metrology system for inspecting a nanophotonic device, the nanophotonic device being a wire-grid polarizer, WGP, the large area functional metrology system comprising:

   a light source configured to irradiate light on a portion of the nanophotonic device;
   an optical component;
   one or more camera sensors (110A, 110B) configured to record images of a portion of the nanophotonic device subjected to the light irradiating from the light source, the light comprising polarization content used for generating a contrast ratio map of the WGP in a narrow spectral band,
   wherein the one or more camera sensors record a reference image from light from a reference;
   a detector to process the images to detect one or more defects in the nanophotonic device, wherein the one or more defects are identified using a combination of two types of defect signatures, wherein the two types of defect signatures are functional signatures and spatial signatures, wherein the functional signatures are based on the contrast ratio of the WGP;
   wherein the large area functional metrology system is configured to determine a root-cause corresponding to a deviation from a desired nanofabrication process by matching the combination of two types of defect signatures to the root-cause.

2. The large area functional metrology system of one of claim 1,

   wherein the reference image is used to calculate a nanophotonic property; or
   wherein the large area functional metrology system is part of a wafer-scale manufacturing system, roll-to-roll manufacturing system, or sheet-to-sheet manufacturing system creating the nanophotonic device.

3. The large area functional metrology system of claim 1 or 2, wherein the camera sensor and beam move synchronously with a moving substrate to substantially eliminate relative motion between the camera sensor and a substrate.

4. The large area functional metrology system of one of claims 1 to 3, further comprising a support upon which the nanophotonic device is placed to substantially eliminate out of plane displacements that cause focusing blurs in the image taken by the camera sensor.

5. The large area functional metrology system of one of claims 1 to 4, wherein the optical component includes a lens with depth of focus that substantially eliminates focusing blurs caused by out-of-plane displacements of a substrate; or further comprising a control system to identify a registration mark on a substrate of the nanophotonic device and adjust a focus plane of the camera sensor to substantially eliminate focusing blurs caused by out-of-plane displacement of the substrate.

6. A method for monitoring of a nanofabrication process, the method comprising:

   irradiating a light on a portion of a nanophotonic device, the nanophotonic device being a wire-grid polarizer, WGP;
   recording images of a portion of the nanophotonic device subjected to the light, the light comprising polarization content used for generating a contrast ratio map of the WGP in a narrow spectral band,
   wherein a reference image is recorded from light from a reference;
   processing the images to detect one or more defects in the nanophotonic device, wherein the one or more defects are identified using a combination of two types of defect signatures, wherein the two types of defect signatures are functional signatures and spatial signatures, wherein the functional signatures are based on the contrast ratio of the WGP; and
   determining a root-cause by matching the combination of two types of defect signatures to the root-cause, wherein the root-cause is a deviation from a desired nanofabrication process.

**Patentansprüche**

1. Ein großflächiges funktionelles Messsystem zur Inspektion einer nanophotonischen Einrichtung, wobei die nanophotonische Einrichtung ein Draht-Gitter-Polarisator, WGP, ist, und das großflächige funktionelle Messsystem Folgendes aufweist:

   eine Lichtquelle, die so konfiguriert ist, dass sie Licht auf einen Abschnitt der nanophotonischen Einrichtung abstrahlt;
   ein optisches Bauteil;
   einen oder mehrere Kamerasensoren (110A, 110B), die so konfiguriert sind, dass sie Bilder eines Abschnitts der nanophotonischen Einrichtung aufzeichnen, der dem von der Lichtquelle eingestrahlten Licht ausgesetzt ist, wobei das Licht einen Polarisationsgehalt aufweist, der zur Erzeugung einer Kontrastverhältniskarte des WGP in einem schmalen Spektralband verwendet wird,
   wobei der eine oder die mehreren Kamerasensoren ein Referenzbild aus Licht von einer Referenz aufzeichnen;
   einen Detektor zum Verarbeiten der Bilder, um einen oder mehrere Defekte in der nanophotonischen Vorrichtung zu detektieren, wobei der eine oder die mehreren Defekte unter Verwendung einer Kombination von zwei Arten von Defektsignaturen identifiziert werden, wobei die zwei Arten von Defektsignaturen funktionale Signaturen und räumliche Signaturen sind, wobei die funktionalen Signaturen auf dem Kontrastverhältnis des WGP basieren;
   wobei das großflächige funktionale Messsystem so konfiguriert ist, dass es eine Grundursache bestimmt, die einer Abweichung von einem gewünschten Nanofabrikationsprozess entspricht, indem es die Kombination von zwei Arten von Fehlersignaturen mit der Grundursache abgleicht.

2. Das großflächige funktionale Messsystem nach eines des Anspruch 1,

   wobei das Referenzbild zur Berechnung einer nanophotonischen Eigenschaft verwendet wird; oder
   wobei das großflächige funktionale Messsystem Teil eines Fertigungssystems im Wafer-Maßstab, eines Rolle-zu-Rolle-Fertigungssystems oder eines Blatt-zu-Blatt-Fertigungssystems ist, das die nanophotonische Vorrichtung erzeugt.

3. Das großflächige funktionale Messsystem nach Anspruch 1 oder 2, wobei sich der Kamerasensor und der Strahl synchron mit einem sich bewegenden Substrat bewegen, um eine relative Bewegung zwischen dem Kamerasensor und einem Substrat im Wesentlichen zu eliminieren.

4. Das großflächige funktionale Messsystem nach einem der Ansprüche 1 bis 3, das ferner einen Träger aufweist, auf dem die nanophotonische Einrichtung platziert ist, um Verschiebungen außerhalb der Ebene, die Fokussierungsunschärfen in dem vom Kamerasensor aufgenommenen Bild verursachen, im Wesentlichen zu eliminieren.

5. Das großflächige funktionale Messsystem nach einem der Ansprüche 1 bis 4, wobei das optische Bauteil eine Linse mit Tiefenschärfe aufweist, die Fokussierungsunschärfen, die durch Verschiebungen eines Substrats außerhalb der Ebene verursacht werden, im Wesentlichen eliminiert; oder
   weiterhin eine Steuereinheit aufweist, um eine Registriermarke auf einem Substrat der nanophotonischen Vorrichtung zu identifizieren und eine Fokusebene des Kamerasensors einzustellen, um Fokussierungsunschärfen, die durch Verschiebungen des Substrats außerhalb der Ebene verursacht werden, im Wesentlichen zu eliminieren.

6. Ein Verfahren zur Überwachung eines Nanofabrikationsprozesses, wobei das Verfahren aufweist:

   Bestrahlung eines Abschnitts einer nanophotonischen Einrichtung mit Licht, wobei die nanophotonische Einrichtung ein Draht-Gitter-Polarisator, WGP, ist
   Aufzeichnung von Bildern eines Abschnitts der nanophotonischen Einrichtung, der dem Licht ausgesetzt ist, wobei das Licht einen Polarisationsgehalt aufweist, der zur Erzeugung einer Kontrastverhältniskarte des WGP in einem schmalen Spektralband verwendet wird,
   wobei ein Referenzbild aus Licht von einer Referenz aufgezeichnet wird;
   Verarbeiten der Bilder, um einen oder mehrere Defekte in der nanophotonischen Vorrichtung zu detektieren, wobei der eine oder die mehreren Defekte unter Verwendung einer Kombination von zwei Arten von Defektsignaturen identifiziert werden, wobei die beiden Arten von Defektsignaturen funktionale Signaturen und räumliche Signaturen sind, wobei die funktionalen Signaturen auf dem Kontrastverhältnis des WGP basieren; und
   Bestimmen einer Grundursache durch Abgleichen der Kombination von zwei Arten von Defektsignaturen mit der Grundursache, wobei die Grundursache eine Abweichung von einem gewünschten Nanofabrikationsprozess ist.

**Revendications**

1. Système de métrologie fonctionnelle à grande surface pour inspecter un dispositif nanophotonique, le dispositif nanophotonique étant un polariseur à grille de fils, WGP, le système de métrologie fonctionnelle à grande surface comprenant :

   une source lumineuse configurée pour irradier de la lumière sur une partie du dispositif nanophotonique ;
   un composant optique ;
   un ou plusieurs capteurs de caméra (110A, 110B) configurés pour enregistrer des images d'une partie du dispositif nanophotonique soumise à la lumière irradiée par la source lumineuse, la lumière comprenant un contenu de polarisation utilisé pour générer une carte de rapport de contraste du WGP dans une bande spectrale étroite, dans lequel le ou les capteurs de caméra enregistrent une image de référence à partir de la lumière provenant d'une référence ;
   un détecteur pour traiter les images afin de détecter un ou plusieurs défauts dans le dispositif nanophotonique, dans lequel le ou les défauts sont identifiés en utilisant une combinaison de deux types de signatures de défauts, dans lequel les deux types de signatures de défauts sont des signatures fonctionnelles et des signatures spatiales, dans lequel les signatures fonctionnelles sont fondées sur le rapport de contraste de la WGP ;
   le système de métrologie fonctionnelle à grande surface est configuré pour déterminer une cause fondamentale correspondant à un écart par rapport à un processus de nanofabrication souhaité en faisant correspondre la combinaison de deux types de signatures de défauts à la cause fondamentale.

2. Système de métrologie fonctionnelle à grande surface selon la revendication 1,

   dans lequel l'image de référence est utilisée pour calculer une propriété nanophotonique ; ou
   dans lequel le système de métrologie fonctionnelle à grande surface fait partie d'un système de fabrication à l'échelle de la plaquette, d'un système de fabrication rouleau à rouleau ou d'un système de fabrication feuille à feuille créant le dispositif nanophotonique.

3. Système de métrologie fonctionnelle à grande surface selon les revendications 1 et 2, dans lequel le capteur et le faisceau de la caméra se déplacent de manière synchronisée avec un substrat en mouvement afin d'éliminer substantiellement le mouvement relatif entre le capteur de la caméra et le substrat.

4. Système de métrologie fonctionnelle à grande surface selon l'une des revendications 1 à 3, comprenant en outre un support sur lequel le dispositif nanophotonique est placé pour éliminer sensiblement les déplacements hors plan qui provoquent des flous de focalisation dans l'image prise par le capteur de la caméra.

5. Système de métrologie fonctionnelle à grande surface selon l'une des revendications 1 à 4, dans lequel le composant optique comprend une lentille dont la profondeur de champ élimine sensiblement les flous de mise au point causés par les déplacements hors plan d'un substrat ; ou
   comprenant en outre un système de contrôle permettant d'identifier une marque d'enregistrement sur un substrat du dispositif nanophotonique et d'ajuster un plan de mise au point du capteur de la caméra afin d'éliminer substantiellement les flous de mise au point causés par un déplacement hors plan du substrat.

6. Procédé de surveillance d'un processus de nanofabrication, comprenant :

   l'irradiation d'une lumière sur une partie d'un dispositif nanophotonique, le dispositif nanophotonique étant un polariseur à grille métallique, WGP ;
   l'enregistrement d'images d'une partie du dispositif nanophotonique soumis à la lumière, la lumière comprenant un contenu de polarisation utilisé pour générer une carte de rapport de contraste du WGP dans une bande spectrale étroite,
   une image de référence est enregistrée à partir de la lumière provenant d'une référence ;
   traiter les images pour détecter un ou plusieurs défauts dans le dispositif nanophotonique, le ou les défauts étant identifiés à l'aide d'une combinaison de deux types de signatures de défauts, les deux types de signatures de défauts étant des signatures fonctionnelles et des signatures spatiales, les signatures fonctionnelles étant basées sur le rapport de contraste de la WGP ; et

déterminer une cause fondamentale en faisant correspondre la combinaison de deux types de signatures de défauts à la cause fondamentale, la cause fondamentale étant un écart par rapport à un processus de nanofabrication souhaité.

FIG.1A

FIG.1B

FIG.2

FIG.3A

FIG.3B

INCIDENT LIGHT   REFLECTED LIGHT

P-POL.

S-POL.        S-POL.

Al GRATING

GLASS SUBSTRATE

300

P-POL.

TRANSMITTED LIGHT

FIG.3C

FIG.3D

FIG.3E

FIG.3F

FIG.3G

FIG.3H

FIG.3I

FIG.4

| 501 | 505 | 507 | 509 |
|---|---|---|---|
| IDENTIFY DEFECT | DETERMINE DEFECT FUNCTIONAL, SPATIAL AND TEMPORAL SIGNATURES | MATCH WITH ALL PROCESS ERRORS THAT CAUSE DEFECTS WITH SIMILAR SIGNATURES | RUN ADDITIONAL TESTS TO NARROW CHOICES |

FIG.5A

MEAN CR VS WAVELENGTH

FIG.5B

FIG.5C

# FIG.6A

# FIG.6B

FIG.6C

FIG.6D

Tp (TRANSMISSION OF P-POL LIGHT)

## FIG.7

Ts (TRANSMISSION OF S-POL LIGHT)

## FIG.8

1 ms EXPOSURE

$T_P$ (TRANSMISSION OF P-POL LIGHT)

FIG.9

150 ms EXPOSURE

$T_S$ (TRANSMISSION OF S-POL LIGHT)

FIG.10

775

760

34 ms EXPOSURE

700

T$_P$ (TRANSMISSION OF P-POL LIGHT)

# FIG.11A

500 ms

775

184 ms EXPOSURE

700

760

T$_S$ (TRANSMISSION OF S-POL LIGHT)

# FIG.11B

FIG.11C

FIG.12

FIG.13

FIG.14

FIG.15A

FIG.15B

FIG.16

FIG.16 CONTINUED

FIG.16 CONTINUED

FIG.17

FIG.18

**EP 3 532 429 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62413291

- US 4541716 A

**Non-patent literature cited in the description**

- **B. SHEN** ; **P. WANG** ; **R. POLSON** ; **R. MENON**. Ultra-high-efficiency metamaterial polarizer. *Optica*, 2014, vol. 1 (5), 356-360